# EUROPÄISCHE PATENTSCHRIFT

(11) **EP 3 544 831 B1**
(45) Veröffentlichungstag und Bekanntmachung des Hinweises auf die Patenterteilung: **28.07.2021**
(21) Anmeldenummer: 17829928.5
(22) Anmeldetag: 24.11.2017
(51) Int. Cl.: B60C 23/12

(54) **VERDICHTERANORDNUNG MIT RADIALEN KOLBEN**
COMPRESSOR ASSEMBLY COMPRISING RADIAL PISTONS
ENSEMBLE COMPRESSEUR À PISTONS RADIAUX

(30) Priorität: 24.11.2016 DE 102016122738
(43) Veröffentlichungstag der Anmeldung: 02.10.2019
(73) Patentinhaber: KT Projektentwicklungs-GmbH, 74072 Heilbronn (DE); Illinois Tool Works, Inc., Glenview, Illinois 60025 (US)
(72) Erfinder: TSIBERIDIS, Konstantin, 74199 Untergruppenbach (DE)
(74) Vertreter: Trinks, Ole
(86) Internationale Anmeldenummer: PCT/EP2017/080385
(87) Internationale Veröffentlichungsnummer: WO 2018/096109

(56) Entgegenhaltungen:
- WO-A1-2015/063679
- JP-A- 2007 039 013
- US-A- 2 317 636
- US-A1- 2015 101 723

## Beschreibung

Die Erfindung betrifft eine Verdichteranordnung zur Druckmittelversorgung einer Reifenkavität eines Reifens eines auf einer Radnabe montierbaren Fahrzeugrads, nach dem Oberbegriff des Anspruchs 1.

Die Reifenkavität des Reifens ist also Teil eines auf einer Radnabe montierbaren Fahrzeugrads, wobei die Radnabe um eine Rotationsachse drehbar an einem Radträger gelagert ist.

Zur Befüllung einer Reifenkavität eines Fahrzeugreifens mit einem Druckmittel, wie etwa Druckluft, ist es bekannt, ein Reifenventil am Fahrzeugrad vorzusehen, über welches das Druckmittel in die Reifenkavität eingebracht werden kann. Bei Fahrzeugen, wie Personenkraftwagen, Lastkraftwagen oder Nutzfahrzeugen, sind Reifenventile üblicherweise im Bereich einer Felge, auf der der Reifen montiert ist, so angeordnet, dass sie von außen leicht zugänglich sind.

An das Reifenventil kann eine fahrzeugexterne Druckmittelquelle angeschlossen werden, etwa mittels einer Schlauchleitung, um so den Reifendruck, insbesondere auf manuelle Weise, kontrollieren und gegebenenfalls korrigieren zu können.

Ferner sind fahrzeugseitige Druckmittelversorgungssysteme bekannt, die es gestatten, die Druckmittelbefüllung der Reifenkavität eines Fahrzeugreifens autonom vorzunehmen. Hierzu ist es bekannt von einer zentralen, fahrzeugseitig bereitgestellten Druckmittelquelle, beispielsweise einem Kompressor oder einem Druckspeicher, Druckmittelleitungen bis zu den Rädern vorzusehen und in die Reifenkavität zu führen. Beim Übergang von gegenüber dem Fahrzeug drehfesten Bauteilen, wie dem Radträger, auf die sich im Fahrbetreib drehenden Räder werden sogenannte Drehdurchführungen realisiert, die eine Druckmittelbefüllung auch während der Fahrt, d.h. bei sich drehenden Rädern, ermöglichen. Auf diese Weise kann der Reifendruck z.B. an veränderte Beladungsverhältnisse, Fahrbahnoberflächen und Umgebungstemperaturen angepasst werden oder Leckagen bspw. über Diffusion ausgeglichen werden.

Ein Problem der bekannten Systeme ist, dass bei fahrzeugexternen Druckmittelquellen jeweils gehalten und der Druck in allen Reifenkavitäten aufwändig geprüft werden muss. Bei den bekannten fahrzeugseitigen

Druckmittelquellen, die über Drehdurchführungen Druckmittel an die Reifenkavität fördern, stellt die Betriebssicherheit der Drehdurchführungen für das Druckmittel ein Problem dar. Die Drehdurchführungen lassen sich nur mit sehr hohem Aufwand derart robust und langlebig fertigen, dass sie ein Fahrzeugleben lang halten, was teuer und unwirtschaftlich ist.

Eine Verdichteranordnung gemäß dem Oberbegriff des Anspruchs 1 ist aus der WO2015063679 A1 bekannt.

Aufgabe der vorliegenden Erfindung ist es, eine Verdichteranordnung zu schaffen, die zuverlässig und wartungsarm über ein gesamtes Fahrzeugleben hinweg eine Befüllung der Reifenkavität mit Druckmittel sicherstellt. Vorzugsweise arbeitet die Verdichteranordnung dabei automatisiert. Unter automatisiert ist dabei zu verstehen, dass hier kein Anhalten und Verwenden einer fahrzeugexternen Druckmittelquelle nötig ist. Die Aufnahme des Betriebs der erfindungsgemäßen Verdichteranordnung kann jedoch autonom, d.h. über eine beliebig gestaltete Regel- oder Steueranordnung im Fahrzeug erfolgen oder auf ein Steuersignal durch den Fahrzeugführer hin.

Diese Aufgabe wird durch eine Verdichteranordnung nach Anspruch 1 gelöst. Die erfindungsgemäße Verdichteranordnung kennzeichnet sich dadurch, dass die Verdichteranordnung wenigstens einen nabenseitigen Kompressionsraum umfasst, dessen Volumen durch eine translatorische Bewegung eines Verdichterbauteils veränderbar ist, wobei durch eine Volumenverminderung des Kompressionsraums ein in die Reifenkavität zu leitendes Druckmittel unter Druck setzbar ist, und wobei die Verdichteranordnung ein Getriebe, vorzugsweise ein Kurvengetriebe, umfasst, das eingerichtet ist, um durch ein Zusammenwirken eines radträgerseitigen Getriebeteils mit einem nabenseitigen Getriebeteil eine Rotationsbewegung zwischen Radträgerseite und Radnabenseite in eine oszillierende translatorische Bewegung des Verdichterbauteils umzuwandeln, wobei die translatorische Bewegung des Verdichterbauteils wenigstens teilweise, vorzugsweise vollständig, in einer zur Rotationsachse orthogonal verlaufenden radialen Richtung verläuft.

Eine derartige Verdichteranordnung hat den Vorteil, dass sie aufgrund ihrer rein mechanisch möglichen Bauweise sehr robust ausgeführt sein kann. Durch die nabenseitige Anordnung des Kompressionsraus wird das unter Druck stehende Druckmittel direkt am sich drehenden Teil des Fahrzeugrades bereitgestellt, sodass eine Drehdurchführung für das Druckmittel nicht notwendig ist. Mit anderen Worten wird das Druckmittel direkt am Einsatzort also an der sich drehenden Reifenkavität bereitgestellt.

Drehdurchführungen für Druckmittel sind schwierig zu gestalten und Ihre Zuverlässige und langfristig funktionsfähige Realisierung ist technisch anspruchsvoll. Die Realisierung solcher Druckmitteldrehdurchführungen wird überdies durch die widrigen Umstände im Bereich des Fahrzeugrades erschwert, da hier mit starken Verschmutzungen und stoßartigen Belastungen zu rechnen ist. Die erfindungsgemäße Verdichteranordnung ermöglicht es beim Fahrbetrieb des Fahrzeugs, in dem die Verdichteranordnung montiert ist, stets Druckmittel unter ausreichendem Druck zur Verfügung zu stellen und somit eine stets ausreichenden Füllung des Reifens sicherzustellen.

Da die translatorische Bewegung des Verdichterbauteils wenigstens teilweise in radialer Richtung verläuft, kann die Verdichteranordnung besonders platzsparend bei großen Volumen des Kompressionsraums realisiert werden.

Im Kontext der vorliegenden Anmeldung sind unter Nabenseite und nabenseitigen Komponenten derartige Komponenten zu verstehen, die gegenüber der Radnabe drehfest angeordnet sind. Derartige Komponenten sind also unmittelbar oder mittelbar mit der Radnabe derart verbunden, dass sie sich bei einer Rotation der Radnabe relativ zum Radträger mit der Radnabe drehen. Der Radträger ist fahrzeugfest. Radträgerseite und radträgerseitige Komponenten sind damit gegenüber dem Radträger drehfest. Bei einer Rotation des Rades bzw. der Radnabe erfolgt also eine rotatorische Relativbewegung zwischen den radträgerseitigen Komponenten, bspw. der Fahrgastzelle des Fahrzeugs und dem Rad bzw. dem Reifen, der Radnabe und den weiteren nabenseitigen Komponenten.

Das radträgerseitige Getriebeteil ist also im am Fahrzeug angebrachten Zustand vollständig drehfest mit den radträgerseitigen Komponenten verbunden. Im Fahrbetrieb des Fahrzeugs dreht sich also kein Teil des radträgerseitigen Getriebeteils. Es drehen sich lediglich die nabenseitigen Komponenten, insbesondere das nabenseitige Getriebeteil dreht sich vollständig um die Rotationsachse.

Das nabenseitige Getriebeteil ist also stets drehfest mit den sich im Fahrbetreib des Fahrzeugs drehenden nabenseitigen Komponenten. Das radträgerseitige Getriebeteil ist jedenfalls dann, wenn die Verdichteranordnungen im Betrieb ist, jedoch vorzugsweise stets, drehfest mit dem Fahrzeug bzw. radträgerseitigen Komponenten.

Vorzugsweise ist das radträgerseitige Getriebeteil vollständig starr und unbeweglich, also weder rotatorisch noch translatorisch beweglich, gegenüber der Radträgerseite angeordnet.

Vorzugsweise ist eine der erfindungsgemäßen Verdichteranordnungen an jedem Rad eines Fahrzeugs angeordnet, sodass alle Räder des Fahrzeugs stets mit ausreichendem Druck in ihrer jeweiligen Reifenkavität versorgt sind. Da dementsprechend jedes Rad seine eigene Druckmittelversorgung umfasst, sind Drehdurchführungen zur Druckmittelversorgung überflüssig.

Gegenstand der vorliegenden Erfindung ist auch ein Fahrzeug, indem die beschriebene Verdichteranordnung verbaut ist.

Vorteilhafterweise umfasst das radträgerseitige Getriebeteil eine Scheibenkurve und/oder eine Scheibennutkurve und/oder eine Scheibenwulstkurve. Hierdurch kann in vorteilhafterweise die rotatorische Relativbewegung zwischen radträgerseitigem Getriebeteil und nabenseitigem Getriebeteil in die translatorische Bewegung des Verdichterbauteils umgewandelt werden.

Unter einer Scheibenkurve ist dabei vorliegend ein Bauteil zu verstehen, dass scheibenartig ausgebildet ist und eine Außenkontur oder Innenkontur aufweist, wobei die Außenkontur bzw. die Innenkontur einen Verlauf um die Rotationsachse aufweist, der vom Verlauf einer konzentrisch um die Rotationsachse verlaufenden Kreisbahn abweicht

Unter einer Scheibennutkurve ist dabei ein scheibenartiges Element zu verstehen, dass eine Nut aufweist, wobei diese Nut einen Verlauf um die Rotationsachse aufweist, der vom Verlauf einer konzentrisch um die Rotationsachse verlaufenden Kreisbahn abweicht.

Eine Scheibenwulstkurve bezeichnet ein Element, bei dem ein scheibenartiges Element eine Wulst umfasst, wobei die Wulst einen Verlauf um die Rotationsachse aufweist, der vom Verlauf einer konzentrisch um die Rotationsachse verlaufenden Kreisbahn abweicht.

Durch die eben genannten Ausführungsformen kann in vorteilhafter, zuverlässig arbeitender und platzsparender Art und Weise ein radträgerseitiges Getriebeteil ausgebildet werden.

Bevorzugt ist weiterhin, wenn das nabenseitige Getriebeteil einen Stößelabtrieb umfasst. Hierdurch kann in einfacher und platzsparender Bauweise ein Abtrieb des Getriebes auf Seiten der Nabe implementiert werden.

Dabei ist besonders bevorzugt, wenn der Stößelabtrieb über eine Innenkontur der Scheibenkurve antreibbar ist. Da bei dieser Ausführungsvariante der Stößelabtrieb von der Innenkontur zur Rotationsachse hin angeordnet ist, baut die eben beschriebene Ausführungsform besonders platzsparend.

Alternativ hierzu ist es auch im Sinne der Erfindung, wenn der Stößelabtrieb über eine Außenkontur der Scheibenkurve antreibbar ist. Hierdurch kann das radträgerseitige Getriebeteil besonders platzsparend ausgebildet werden und große Kompressionsräume können realisiert werden, was eine hohe Förderleistung der Verdichteranordnung gewährleistet.

Bevorzugt ist auch, wenn der Stößelabtrieb in radialer Richtung gesehen zwischen der Rotationsachse und einem Kontaktpunkt mit der Scheibenkurve, der Scheibennutkurve und/oder der Scheibenwulstkurve eine Linearführung aufweist. Eine derartige Lagerung des Stößelabtriebs ermöglicht eine kompakte Bauform der Verdichteranordnung in radialer Richtung.

Vorteilhaft ist auch, der Kontaktpunkt des Stößelabtriebs mit der Scheibenkurve, der Scheibennutkurve und/oder der Scheibenwulstkurve in radialer Richtung gesehen zwischen der Rotationsachse und der Linearführung des Stößelabtriebs liegt. Hierdurch kann der Kontaktpunkt des Stößelabtriebs nah an der Rotationsachse realisiert werden und hierdurch die Dimensionierung des radträgerseitigen Getriebeteils klein gehalten werden.

In einer bevorzugten Ausführungsform ist das Verdichterbauteil einstückig mit dem nabenseitigen Getriebeteil ausgebildet. Hierdurch kann die vom nabenseitigen Getriebeteil aufgenommene Kraft direkt in die Verdichtung des Druckmittels überführt werden. Außerdem stellt dies eine Ausführungsform dar, die wenige Bauteile benötigt damit geringe Störungsanfälligkeit aufweist.

Erfindungsgemäß ist die Verdichteranordnung derart ausgeführt, dass sie eine Kupplungseinrichtung umfasst, mittels welcher das nabenseitige Getriebeteil in Zusammenwirkung mit dem radträgerseitigen Getriebeteil bringbar ist. Hierdurch kann der Betrieb der Verdichteranordnung situationsbedingt aufgenommen bzw. abgestellt werden. Hiermit ist es möglich die Verdichteranordnung lediglich dann zu betreiben, wenn ein Solldruck in der zu füllenden Reifenkavität unterschritten ist. Die Verdichteranordnung kann dann betrieben werden, bis der Solldruck erreicht ist und kann anschließend abgeschaltet bzw. ausgekuppelt werden.

Erfinderisch ist, wenn die Kupplungseinrichtung pneumatisch, magnetisch, elektrisch oder elektromechanisch betätigbar ist, ein nabenseitiges Kupplungselement umfasst, das, vorzugsweise pneumatisch, magnetisch, elektrisch oder elektromechanisch, von einer Sperrstellung in eine Freigabestellung und/oder andersherum überführbar ist, wobei das nabenseitige Getriebeteil mit dem radträgerseitigen Getriebeteil zusammenwirkt, wenn sich das Kupplungselement in der Freigabestellung befindet, und wobei das nabenseitige Getriebeteil an dem Zusammenwirken mit dem radträgerseitigen Getriebeteil gehindert ist, wenn sich das Kupplungselement in der Sperrstellung befindet.

Hierdurch kann in effizienter Art und Weise ein Zusammenwirken zwischen nabenseitigem und radträgerseitigem Getriebeteil über das Kupplungselement geschaltet werden.

Es ist besonders vorteilhaft wenn, das nabenseitige Kupplungselement in die Sperrstellung, insbesondere über eine Feder, vorgespannt ist. Im Grundzustand ist damit eine Zusammenwirkung des nabenseitigen und radträgerseitigen Getriebeteils unterbunden. Damit wird im normalen Fahrbetrieb keine unnötige Energie verbraucht. Lediglich bei Bedarf kann über die Kupplungseinrichtung bzw. das Kupplungselement das nabenseitige Getriebeteil in Zusammenwirkung mit dem radträgerseitigen Getriebeteil gebracht werden.

Es ist vorteilhaft, wenn das nabenseitige Getriebeteil in eine Stellung vorgespannt ist, in der es mit dem radträgerseitigen Getriebeteil zusammenwirkt. Damit genügt ein Steuerimpuls an die Kupplungseinrichtung und das nabenseitige Getriebeteil gelangt in Zusammenwirkung mit dem radträgerseitigen Getriebeteil.

Von Vorteil ist überdies, wenn das nabenseitige Kupplungselement einen Sperrabschnitt umfasst, der in der Sperrstellung an einem Anschlagsabschnitt des nabenseitigen Getriebeteils anliegt. Dabei ist es besonders bevorzugt, wenn der Anschlagsabschnitt des nabenseitigen Getriebeteils durch das Verdichterbauteil gebildet ist. Eine derartige mechanische Sperrung des nabenseitigen Getriebeteils arbeitet zuverlässig und störungsarm was die Betriebssicherheit der erfindungsgemäßen Verdichteranordnung erhöht. Der Sperrabschnitt des nabenseitigen Kupplungselements kann bspw. durch eine translatorische Bewegung oder durch eine Schwenkbewegung in Anlage mit dem Anschlagsabschnitt des nabenseitigen Getriebeteils gebracht werden bzw. aus der Anlage bewegt werden.

Vorteilhaft ist, wenn das nabenseitige Kupplungselement derart ausgestaltet ist, dass es wenn es in die Sperrstellung übergeht, das nabenseitige Getriebeteil in eine Position drängt, in der es unabhängig von der Stellung des radträgerseitigen Getriebeteils keinen Kontakt mit dem radträgerseitigen Getriebeteil hat. Hierdurch wird unnötiger Verschleiß des nabenseitigen Getriebeteils verhindert Außerdem ist eine derartige Verdichteranordnung im Freilaufbetriebszustand, also im ausgekuppelten Zustand geräuschlos, da kein Kontakt zwischen nabenseitigem Getriebeteil und radträgerseitigem Getriebeteil stattfindet.

Im Sinne der Erfindung ist außerdem, wenn der Sperrabschnitt des nabenseitigen Kupplungselements graduell in einen Freigabeabschnitt des nabenseitigen Kupplungselements übergeht, wobei der Freigabeabschnitt in Richtung der translatorischen Bewegung des Verdichterbauteils gesehen versetzt zu dem Sperrabschnitt angeordnet ist. Hierdurch wird ein gleitendes Übergehen des Kupplungselements von der Freigabestellung in die Sperrstellung ermöglicht. Insbesondere die Kombination dieser Ausführungsform mit der Federvorspannung des Kupplungselements bietet besondere Vorteile. Wird das Kupplungselement nicht durch Beaufschlagung mit Druck über das Druckmittel in die Freigabestellung gebracht bzw. in dieser gehalten, so gleitet es automatisch und ruckfrei in die Sperrstellung. Ein derartiger gradueller Übergang zwischen den Stellungen führt zum geräuscharmen Betrieb bzw. schalten der Verdichteranordnung. Auch kann hierdurch der Verschleiß der erfindungsgemäßen Anordnung gering gehalten werden.

Vorteilhaft ist auch, wenn die Kupplungseinrichtung über eine Druckleitung mittels Druckmittel aus der Reifenkavität betätigbar ist, insbesondere das Kupplungselement mittels Druckmittel aus der Reifenkavität von der Sperrstellung in die Freigabestellung überführbar ist. Die Betätigung der Kupplungseinrichtung mittels Druckmittel aus der Reifenkavität stellt eine vorteilhafte Möglichkeit zur Betätigung der Kupplungseinrichtung dar, da keine externe Energieversorgung zur Betätigung nötig ist.

Besonders vorteilhaft ist, wenn ein Kupplungsventil fluidisch zwischen Kupplungseinrichtung und Reifenkavität vorgesehen ist, an dem das Druckmittel aus der Reifenkavität anliegt und welches bei Unterschreiten eines Reifendruckschwellenwerts öffnet, wodurch die Kupplungseinrichtung mittels Druckmittel aus der Reifenkavität betätigt wird und das nabenseitige Getriebeteil in Zusammenwirkung mit dem radträgerseitigen Getriebeteil gebracht wird. Hierdurch ist es möglich, ohne externe Energieversorgung eine Versorgung der Reifenkavität mit Druckmittel und ausreichendem Druck sicherzustellen, da sobald der Druck in der Reifenkavität unter einen Reifendruckschwellenwert fällt der Reifen automatisch mit weiteren Druckmittel versorgt wird. Hierdurch wird ein gesonderter Regelmechanismus überflüssig. Die Verdichteranordnung kann effizient wartungsarm und zuverlässig mit kostengünstiger Bauweise arbeiten.

Vorteilhaft ist auch, wenn das Kupplungsventil derart ausgebildet ist, dass es bei Überschreiten eines Reifendrucksollwerts, vorzugsweise der über dem Reifendruckschwellenwert liegt, schließt, wodurch die Beaufschlagung der Kupplungseinrichtung mit Druckmittel unterbrochen wird, vorzugsweise wobei das Kupplungsventil oder ein Entlastungsventil derart ausgebildet ist, dass bei Überschreiten des Reifendrucksollwerts die

Kupplungseinrichtung entlüftet wird. Hierdurch wird der Betrieb der Verdichteranordnung bei Erreichen des Reifendrucksollwerts quasi automatisch und sofort eingestellt. Die Kombination dieser Ausführungsform mit einer Ausführungsform, bei der das nabenseitige Getriebeteil in eine Stellung vorgespannt ist, in der es mit dem radträgerseitigen Getriebeteil zusammenwirkt bietet besondere Vorteile, da die Verdichteranordnung besonders reaktionsschnell ein Erreichen bestimmter Druckwerte in der Reifenkavität reagiert. Bei der zuletzt beschriebenen forderten Ausführungsform wird also stets sichergestellt, dass bei Bewegung des Kupplungselements in die Freigabestellung oder generell bei Freigabe des nabenseitigen Getriebeteils dieses in eine Stellung übergeht, in der es in den radträgerseitigen Getriebeteil zusammenwirkt. Hierdurch ergibt sich in gewisser Weise auch eine gewisse Notlaufeigenschaft durch die Verwendung der erfindungsgemäßen Verdichteranordnung.

Vorteilhaft ist überdies, wenn die Verdichteranordnung mehrere Verdichterbauteile umfasst, die vorzugsweise in einer Umfangsrichtung gleichmäßig um die Rotationsachse verteilt angeordnet sind. Dabei ist es besonders vorteilhaft, wenn das radträgerseitige Getriebeteil derart ausgeführt ist, dass jeweils symmetrisch bezüglich der Rotationsachse sich gegenüberliegende Verdichter Bauteile gegenläufig bewegt. Durch das Zusammenwirken des nabenseitigen Getriebeteils mit dem radträgerseitigen Getriebeteils bewegt werden. Bildlich gesprochen das ein obenliegender des Verdichterbauteil nach oben bewegt wird wenn ein untenliegendes Verdichterbauteil nach unten bewegt wird und umgekehrt. Sich bezüglich der Rotationsachse gegenüberliegende Verdichterbauteile werden also bei dieser Ausführungsform jeweils gegenläufig durch das Zusammenwirken des nabenseitigen mit dem radträgerseitigen Getriebeteil bewegt. In diesem Sinne ist auch die asymmetrische Anordnung von Verdichterbauteilen um die Rotationsachse, wobei die Zusammenwirkung der nabenseitigen und radträgerseitigen Getriebeteile derart ausgebildet ist, dass ein unwuchtfreier Betrieb der Verdichteranordnung möglich ist.

Von Vorteil ist weiterhin, wenn an dem Verdichterbauteil ein Flatterventil angeordnet ist. Dies stellt eine besonders kostengünstige und einfache bauliche Maßnahme dar, um den Kompressionsraum mit Druckmittel zu befüllen. Insbesondere dient als Druckmittel hierbei Umgebungsluft, welche durch das Flatterventil angesaugt wird und wenn das Verdichterbauteil das Volumen des Kompressionraums verringert, wenn sich das Verdichterbauteil also im Förderhub befindet, schließt das Flatterventil. Die Erfindung ist jedoch nicht auf die Verwendung von Flatterventilen beschränkt, es können selbstverständlich auch andere Rückschlagventile oder andere Einrichtungen in vorteilhafterweise verwendet werden.

Vorteilhaft ist auch, wenn an dem Verdichterbauteil eine Doppeldichtung angeordnet ist, die ein Schmiermittelreservoir des Verdichterbauteils begrenzt und gleichzeitig den Kompressionsraum gegen das Verdichterbauteil dichtet. Eine derartige Doppeldichtung hat vorteilhafte Dichteigenschaften was die Leckage am Verdichterbauteil minimiert. Überdies führt das Schmiermitteilreservoir in der Doppeldichtung zu einem wartungsarmen und leichtlaufenden Betrieb der Verdichteranordnung.

Besonders bevorzugt ist, wenn die Doppeldichtung zwei Ringdichtungen umfasst und zwischen den Ringdichtungen das Schmiermittelreservoir angeordnet ist. Bevorzugt ist dabei, wenn die Doppeldichtung einstückig ausgeführt ist, am Beispiel der Ringdichtungen also die Ringdichtungen miteinander verbunden sind. Bevorzugt ist auch, wenn das Flatterventil einstückig mit wenigstens einem Teil einer Dichtung des Verdichterbauteils ausgebildet ist. Hierdurch lässt sich die Verdichteranordnung in der Produktion besonders einfach zusammensetzen. Das Flatterventil und die Dichtung können in vorteilhaft einfacher Weise am Verdichterbauteil montiert werden, dabei ist es besonders bevorzugt, wenn die Dichtung die oben beschriebene Doppeldichtung mit Schmiermittelreservoir ist.

Bevorzugt ist, wenn ein nabenseitiger Teil der Verdichteranordnung weitestgehend ringförmig ausgebildet ist. Dies stellt eine besonders platzsparende Bauform der Verdichteranordnung dar.

Bevorzugt ist, wenn das nabenseitige Getriebeteil einen Rollenstößel umfasst. Damit wird ein besonders reibungsarmer Kontakt zwischen nabenseitigem Getriebeteil und radträgerseitigem Getriebeteil ermöglicht.

Bevorzugt ist, wenn der Rollenstößel selbstschmierend ist, vorzugsweise mit einem Schmiermittelreservoir in einem Schaft des Stößels. Damit steht immer genügend Schmiermittel zur Schmierung der Rolle zur Verfügung.

Von Vorteil ist auch, wenn Schmiermittel in dem Schmiermittelreservoir über eine Vorspanneinrichtung in Richtung einer Rolle des Rollenstößels vorgespannt ist. Damit ist eine ständige Schmierung der Rolle sichergestellt, selbst bei widrigsten Bedingungen.

Bevorzugt ist, wenn das Schmiermittelreservoir rollenseitig eine Auslaufsicherung umfasst. Damit ist die Verdichteranordnung besonders betriebssicher.

Vorteilhaft ist auch, wenn sie eine Einrichtung zur Messung und/oder Anzeige des Drucks, der Temperatur und/oder der Feuchtigkeit des Druckmittels in der Reifenkavität umfasst, vorzugsweise die über die Druckmittelleitung mit der Reifenkavität verbindbar ist. Hiermit können die Parameter des Druckmittels im Reifen ständig zuverlässig erfasst werden, da die Verdichteranordnung stets in Kontakt mit dem in der Reifenkavität befindlichen Druckmittel stehen kann.

Vorteilhaft ist, wenn die Verdichteranordnung druckmitteleinlassseitig mit einem Filter verbunden ist. Dies verhindert Verstopfungen der Verdichteranordnung.

Vorteilhaft ist, wenn die Verdichteranordnung ausgebildet ist, um Druckmittel aus der Reifenkavität oder über Förderung durch die Verdichteranordnung zum Reinigen des Filters zu verwenden. Hierdurch wird die Verdichteranordnung selbstwartend.

Weitere Merkmale, Anwendungsmöglichkeiten und Vorteile der Erfindung ergeben sich aus der nachfolgenden Beschreibung von Ausführungsbeispielen der Erfindung, die anhand der Zeichnung erläutert werden, wobei die Merkmale sowohl in Alleinstellung als auch in unterschiedlichen Kombinationen für die Erfindung wesentlich sein können, ohne dass hierauf nochmals explizit hingewiesen wird. Es zeigen:
- Figur 1: eine schematische Darstellung der Anordnung einer erfindungsgemäßen Verdichteranordnung;
- Figur 2 bis 11: eine erste Ausführungsform der erfindungsgemäßen Verdichteranordnung;
- Figur 12 bis 16: eine weitere Ausführungsform der erfindungsgemäßen Verdichteranordnung;
- Figur 17 bis 21: eine weitere Ausführungsform der erfindungsgemäßen Verdichteranordnung;
- Figur 22: eine Schaltskizze einer Kontrolleinrichtung der Verdichteranordnung;
- Figur 23: eine Schaltskizze eines Kupplungsventils der Verdichteranordnung;
- Figur 24: eine weitere Ausführungsform der erfindungsgemäßen Verdichteranordnung;
- Figur 25: eine Detaildarstellung eines Teilbereichs aus Figur 24; und
- Figur 26 bis 31: eine weitere Ausführungsform der erfindungsgemäßen Verdichteranordnung.

In den folgenden Figuren tragen sich entsprechende Bauteile und Elemente gleiche Bezugszeichen. Der besseren Übersichtlichkeit wegen sind nicht in allen Figuren sämtliche Bezugszeichen wiedergegeben.

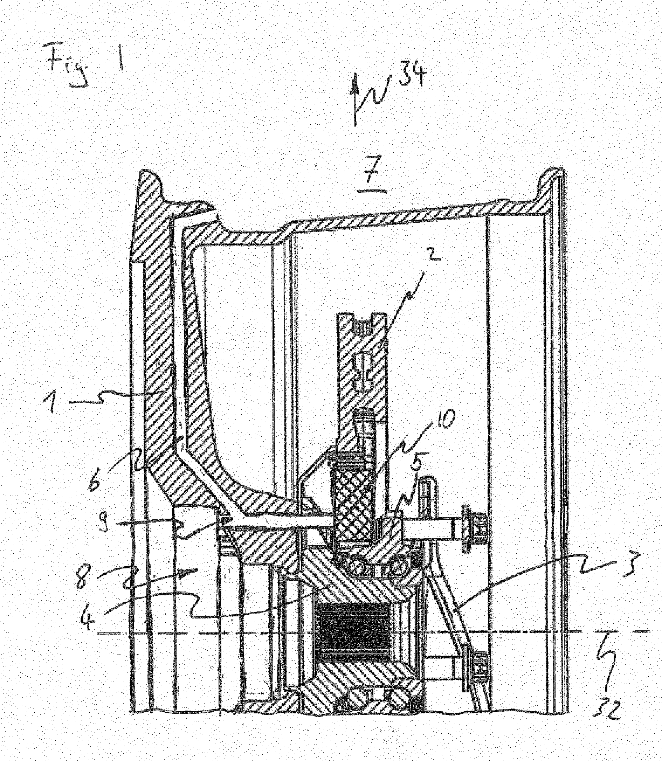

In Figur 1 ist die Einbaulage einer erfindungsgemäßen Verdichteranordnung 10 schematisch dargestellt. Die Verdichteranordnung 10 ist in Figur 1 nur schematisch durch eine kreuzschraffierte Fläche dargestellt.

Eine Felge trägt das Bezugszeichen 1. Eine Bremsscheibe das Bezugszeichen 2, ein Radträger das Bezugszeichen 3, eine Radnabe das Bezugszeichen 4 und ein Radlager trägt das Bezugszeichen 5.

Von der Verdichteranordnung 10 erstreckt sich eine Druckmittelleitung 6 bis zu einer Reifenkavität 7. Der Reifen selbst ist in Figur 1 nicht dargestellt.

Im Bereich einer Radnabenaufnahme 8 weist die Felge einen schematisch dargestellten Anschluss 9 zum Zuführen eines Abdichtmittels auf. Der Anschluss 9 ist dabei optional.

In der in Figur 1 gezeigten Ausführungsform erstreckt sich die Druckmittelleitung 6 durch das Material der Felge 1. Forteilhafterweise ist ein Abschnitt der Druckmittelleitung 6 durch eine holgebohrte Bremsscheibenbefestigungsschraube der Bremsscheibe 2 realisiert. Eine Rotationsachse trägt das Bezugszeichen 32. Eine radiale Richtung das Bezugszeichen 34. Um die Rotationsachse 32 dreht sich beim Betrieb des Fahrzeugs die Nabenseite und damit die nabenseitigen Komponenten gegenüber der Radträgerseite, also den radträgerseitigen Komponenten, wie beispielsweise dem Radträger oder auch der Fahrgastzelle des Fahrzeugs.

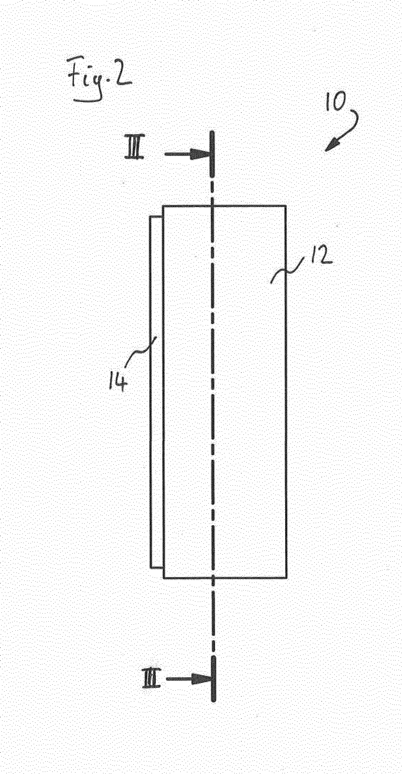

In Figur 2 ist eine erste Ausführungsform einer erfindungsgemäßen Verdichteranordnung 10 im Detail gezeigt. Die Verdichteranordnung 10 umfasst ein erstes Gehäuseteil 12 sowie ein zweites Gehäuseteil 14.

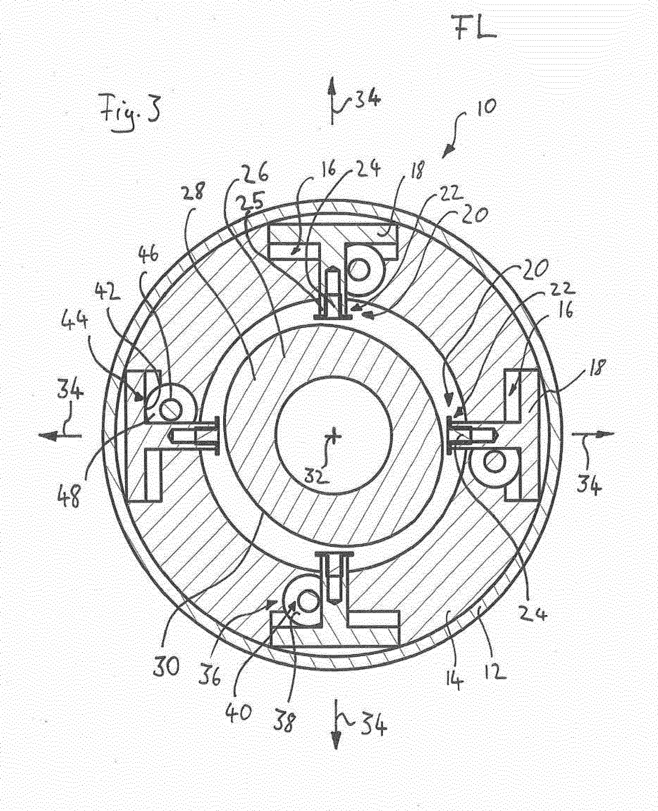

In Figur 3 ist die Verdichteranordnung 10 aus Figur 2 entlang der Linie III-III geschnitten dargestellt. Die Verdichteranordnung 10 umfasst vorliegend insgesamt vier nabenseitige Kompressionsräume 16, von denen lediglich zwei ein Bezugszeichen tragen.

Jedem der Kompressionsräume 16 ist ein nabenseitiges Verdichterbauteil 18 zugeordnet, von denen ebenfalls jeweils nur zwei ein Bezugszeichen tragen. Die Verdichteranordnung 10 umfasst mehrere Getriebe 20, wobei jedem der Kompressionsräume 16 ein Getriebe 20 zugeordnet ist. Die Getriebe 20 sind vorliegend jeweils als Kurvengetriebe 22 ausgeführt.

Die Getriebe 20 weisen jeweils ein nabenseitiges Getriebeteil 24 auf. Die nabenseitigen Getriebeteile 24 sind jeweils durch Stößelabtriebe 25 gebildet. Die Verdichterbauteile 18 sind dabei einstückig mit den Stößelabtrieben 25 bzw. nabenseitigen Getriebeteilen 24 ausgebildet. Die nabenseitigen Getriebeteile 24 der Getriebe 20 können jeweils mit einem radträgerseitigen Getriebeteil 26 der Verdichteranordnung 10 zusammenwirken.

Wie aus Figur 3 ersichtlich, weist die Verdichteranordnung 10 lediglich ein einziges radträgerseitiges Getriebeteil 26 auf, das mit jedem der nabenseitigen Getriebeteile 24 zusammenwirken kann. Das radträgerseitige Getriebeteil 26 ist als Scheibenkurve 28 mit einer äußeren Kurvenkontur 30 ausgebildet.

In Figur 3 ist die Verdichteranordnung 10 in einer Freilaufbetriebslage FL gezeigt. In der Freilaufbetriebslage FL wirken die nabenseitigen Getriebeteile 24 nicht mit dem radträgerseitigen Getriebeteil 26 zusammen.

Die nabenseitigen Getriebeteile 24 befinden sich in der Freilaufbetriebslage FL vorteilhafterweise, wie in Figur 3 gezeigt, in einer Position, in der sie unabhängig von der Ausrichtung des radträgerseitigen Getriebeteils 26 dieses nicht kontaktieren können. Dies wird über Kupplungseinrichtungen 36 erreicht, die jedem der nabenseitigen Getriebeteile 24 zugeordnet ist. Die Kupplungseinrichtungen 36 umfassen jeweils ein Kupplungselement 38. In der in Figur 2 gezeigten Freilaufbetriebslage befinden sich Kupplungselemente 38 jeweils in einer Sperrstellung 40. In dieser Sperrstellung 40 des Kupplungselements 38 sind die nabenseitigen Getriebeteile 24 jeweils an dem Zusammenwirken und vorliegend auch an dem Kontakt mit dem radträgerseitigen Getriebeteil 26 gehindert.

In der Sperrstellung 40 liegt ein Sperrabschnitt 42 der jeweiligen Kupplungselemente 38 jeweils an einem Anschlagsabschnitt 44 der jeweiligen nabenseitigen Getriebeteile 24 an. Der Anschlagsabschnitt 44 ist dabei vorliegend an dem einstückig mit dem nabenseitigen Getriebeteil 24 ausgebildeten Verdichterbauteil 18 ausgebildet.

Die Kupplungselemente 38 sind vorliegend stiftartig ausgebildet und umfassen neben dem Sperrabschnitt 42 auch jeweils einen Freigabeabschnitt 46 sowie einen Übergangsabschnitt 48.

Der Sperrabschnitt 42 ist dabei zylindrisch mit einem ersten Durchmesser ausgebildet und der Freigabeabschnitt 46 zylindrisch mit einem zweiten Durchmesser. Der Übergangsabschnitt 48 vom Sperrabschnitt 42 zum Freigabeabschnitt 46 weist eine Kegelstumpfform auf.

Der Freigabeabschnitt 46 ist in Richtung der radialen Richtung 34 versetzt zum Sperrabschnitt 42 angeordnet.

Bewegt sich eines der Kupplungselemente 38 von der Freigabestellung in die Sperrstellung 40, so drängt es das ihm zugeordnete nabenseitige Getriebeteil 24 in die Position, in der es mit dem radträgerseitigen Getriebeteil 26 nicht in Kontakt treten kann.

Die Kupplungselemente 38 sind jeweils über Federn 49 in die Sperrstellung vorgespannt. Über einen Druckmittelkanal 56 sind die Kupplungselemente 38 jeweils durch Beaufschlagung mit Druckmittel in Freigabestellung überführbar.

Sobald die Beaufschlagung mit Druckmittel über den Druckmittelkanal 56 unterbrochen ist, bewegen sich die Kupplungselemente 38 zurück in die Sperrstellung, da sie Federvorgespannt sind.

Die nabenseitigen Getriebeteile 24 bzw. die Verdichterbauteile 18 werden dabei nach radial außen gedrängt und zwar in eine Stellung, in der sie von dem radial innenliegenden radträgerseitigen Getriebeteil 26 abheben. Die Verdichteranordnung 10 befindet sich dann in der Freilaufstellung FL. Durch den konisch verlaufenden Übergangsabschnitt 48 wird dieses Drängen des nabenseitigen Getriebeteils 24 nach radial außen ermöglicht und der Übergang von Freigabestellung zu Sperrstellung erfolgt ruckfrei und graduell.

Da die nabenseitigen Getriebeteile 24, vorliegend über Federn, ebenfalls vorgespannt sind, müssen die Federn 49 zur Vorspannung der Kupplungselemente 38 stärker als die Federn zur Vorspannung der nabenseitigen Getriebeteile ausgeführt sein. Diese Vorspannung im Zusammenspiel mit dem konischen Übergangsabschnitt 48 ermöglicht das Drängen der nabenseitigen Getriebeteile 24 in die abgehobene Position.

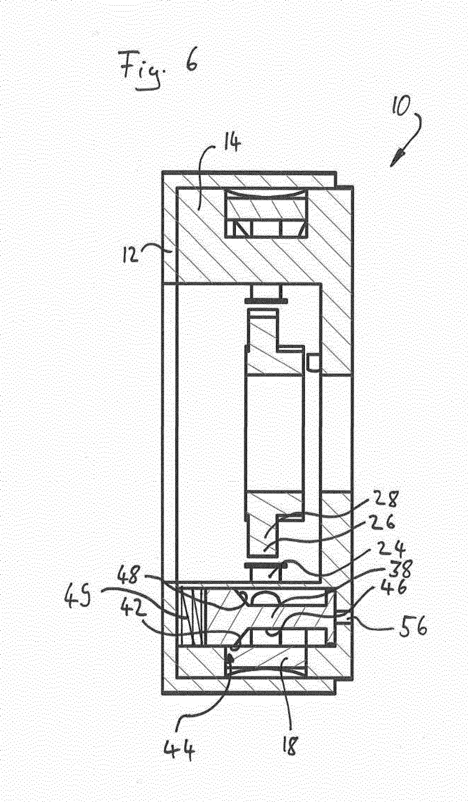

In Figur 6 ist die Sperrstellung der Kupplungselemente 38 besonders gut sichtbar an einem der Kupplungselemente 38 gezeigt.

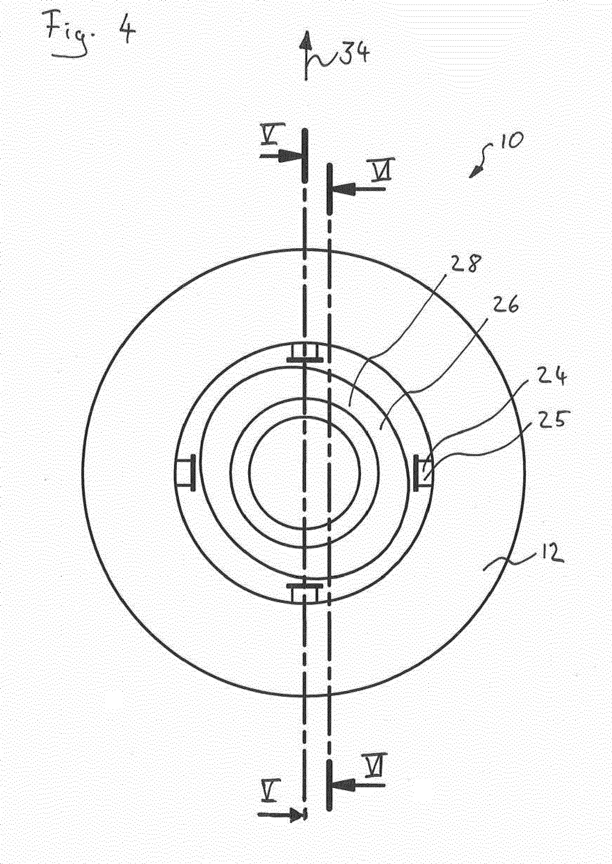

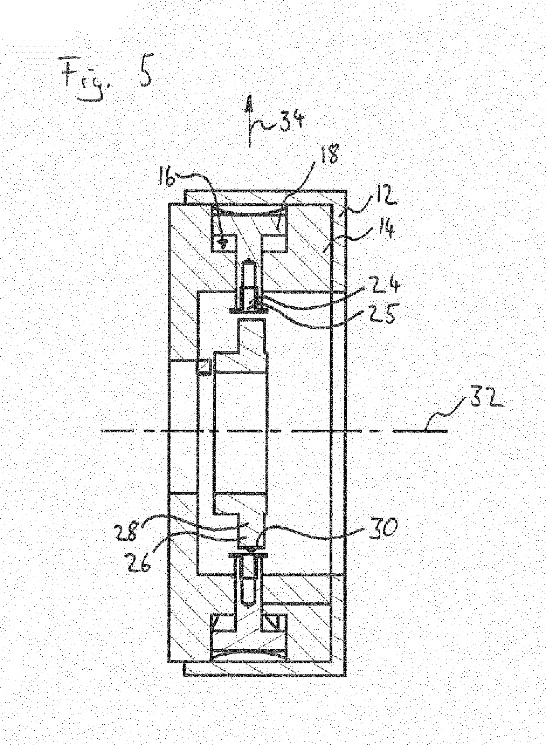

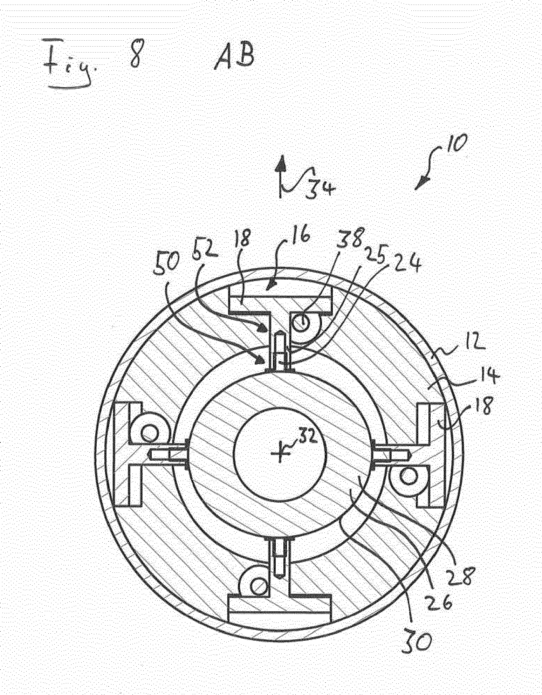

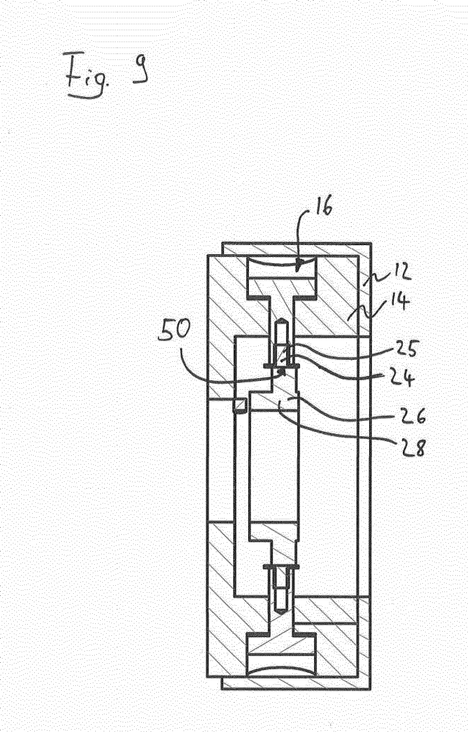

Die Figuren 8 bis 11 zeigen die Verdichteranordnung 10 der Figuren 2 bis 6 in verschiedenen Ansichten und Schnitten in einer Arbeitsbetriebslage AB gezeigt.

In Figur 8 ist ersichtlich, dass die nabenseitigen Getriebeelemente 24 das radträgerseitige Getriebeelement 26 in der Arbeitsbetriebslage AB kontaktieren. Ein jeweiliger Kontaktpunkt der nabenseitigen Getriebeteile 24 mit dem radträgerseitigen Getriebeelement 26 trägt das Bezugszeichen 50.

Wie in Figur 8 ersichtlich, sind die nabenseitigen Getriebeteile 24 jeweils in einer Linearführung 52 derart gelagert, dass sie eine Translationsbewegung des Verdichterbauteils 18 ermöglichen.

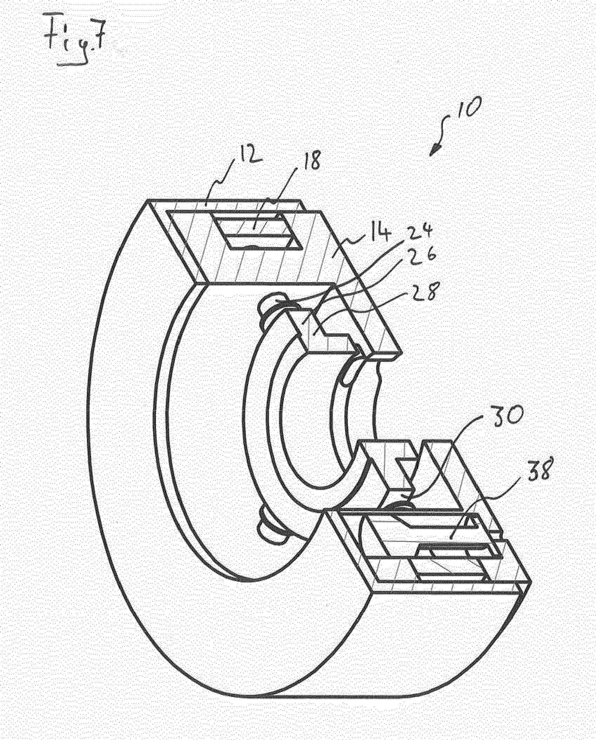

Bei der in den Figuren 2 bis 11 gezeigten Ausführungsform liegt der Kontaktpunkt 50, in radialer Richtung 34 gesehen, jeweils zwischen der Linearführung 52 und der Rotationsachse 32.

Die nabenseitigen Getriebeteile 24, die jeweils einen Stößelabtrieb 25 darstellen, sind über die Außenkontur 30 der Kurvenscheibe 28 bzw. des radträgerseitigen Getriebeteils 26 antreibbar.

Im Betrieb der Verdichteranordnung 10, wie sie in Figur 8 bis 11 in der Arbeitsbetriebslage AB gezeigt ist, bewegen sich die nabenseitigen Komponenten rotatorisch relativ zu den radträgerseitigen Komponenten. Bezogen auf das Fahrzeug stehen die radträgerseitigen Komponenten still, während die nabenseitigen Komponenten gegenüber dem Fahrzeug rotieren.

In der Darstellung von Figur 8 entspricht dies einer festen Verortung des radträgerseitigen Getriebeteils 26, während sich die Gehäuseteile 12 und 14 mitsamt den nabenseitigen Getriebeteilen 24 um die Rotationsachse 32 drehen.

Die Kontaktpunkte 50 der nabenseitigen Getriebeteile 24 gleiten dabei entlang der Außenkontur 30 der Scheibenkurve 28. Da die Außenkontur 30 der Scheibenkurve 28 einen Verlauf um die Rotationsachse 32 aufweist, der vom Verlauf einer konzentrisch um die Rotationsachse 32 verlaufenden Kreisbahn abweicht, wird die eben beschriebene Rotationsbewegung in eine Linearbewegung der nabenseitigen Getriebeteile 24 und der damit einstückig ausgebildeten Verdichterbauteile 18 umgewandelt.

Die Verdichterbauteile 18 führen also eine oszillierende translatorische Bewegung in radialer Richtung 34 aus.

Dabei wird das Volumen der Kompressionsräume 16 jeweils verringert und vergrößert. In den Kompressionsräumen 16 der Verdichteranordnung 10 befindet sich Druckmittel, vorliegend Luft, das jeweils zu einer Reifenkavität 7 gefördert wird, wenn sich das Volumen der Kompressionsräume 16 verringert.

Vergrößert sich das Volumen der Kompressionsräume 16, so schließen Rückschlagventile, die die Verbindung zwischen Reifenkavität 7 und Kompressionsraum 16 unterbrechen. Im Gegenzug öffnen Rückschlagventile, die ein Ansaugen von Umgebungsluft als Druckmittel in die Kompressionsräume 16 ermöglichen.

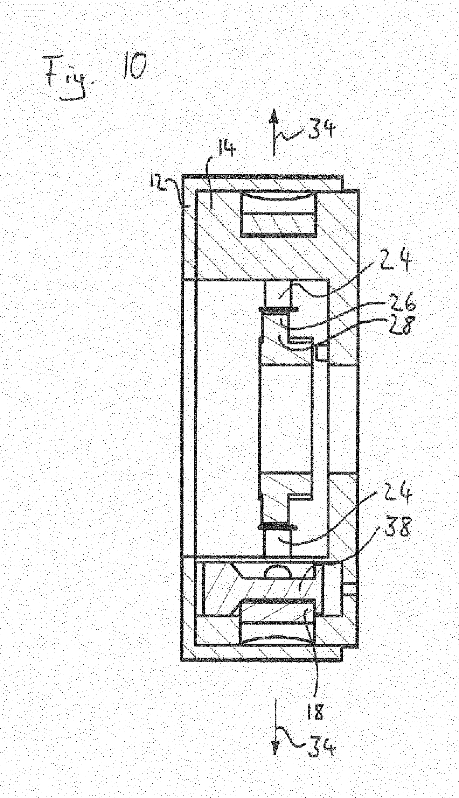

Aus einem Vergleich der Figuren 6 und 10 wird die Funktionsweise der Kupplungseinrichtung 40 besonders gut ersichtlich.

In Figur 10 ist das eine gezeigte Kupplungselement 38 in der Freigabestellung. Das Verdichterbauteil 18 kann sich in radialer Richtung frei bewegen.

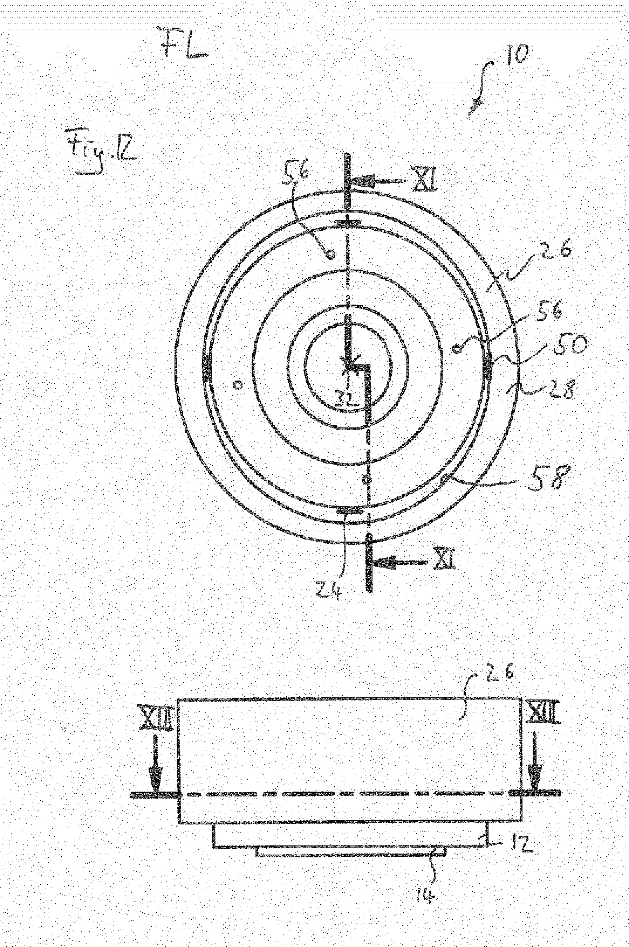

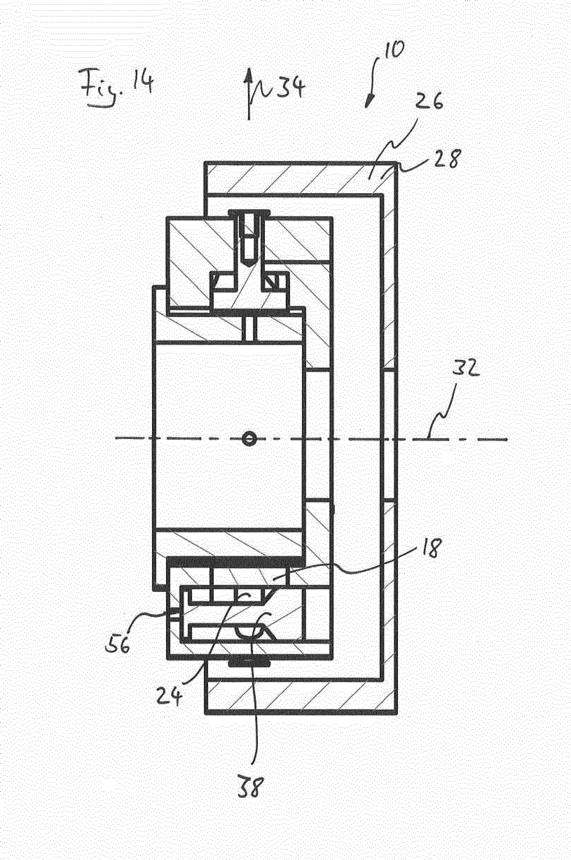

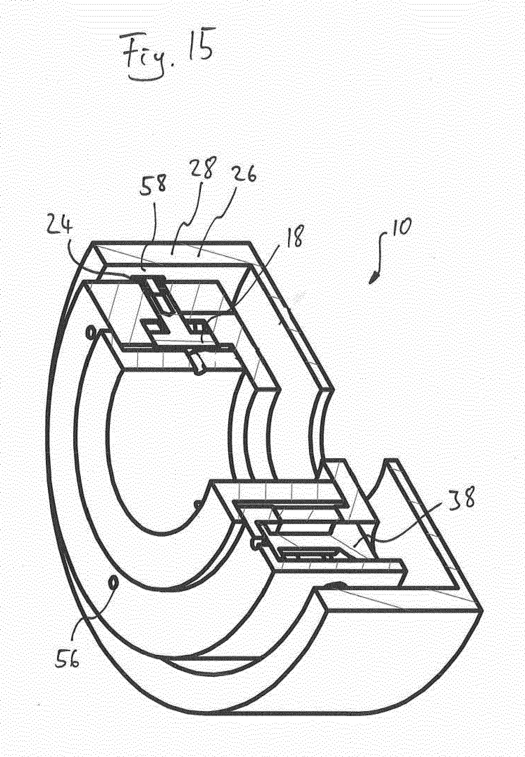

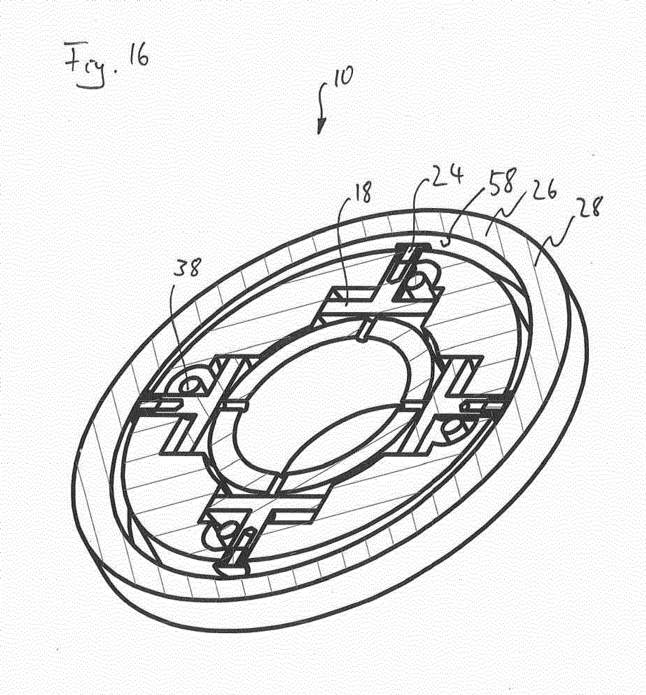

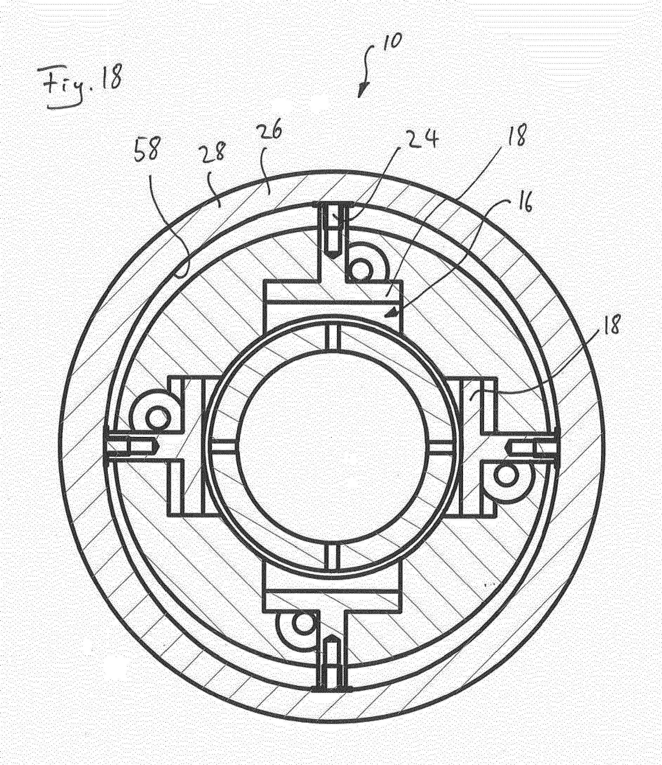

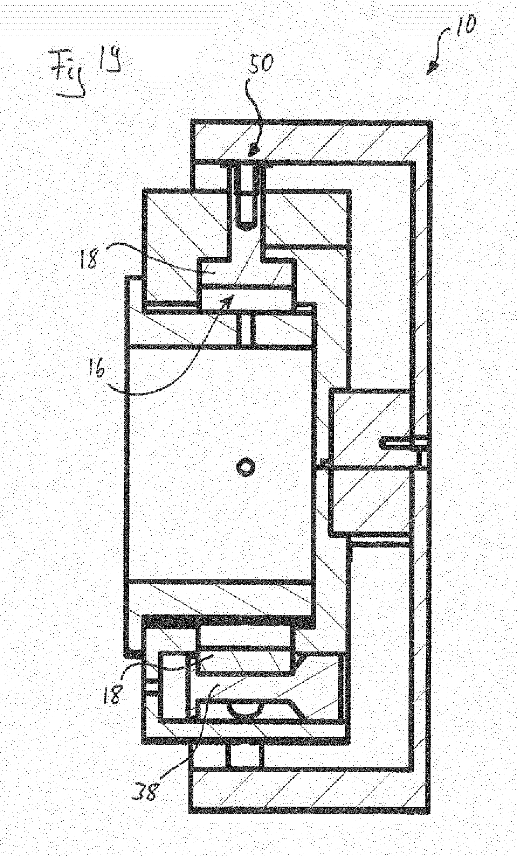

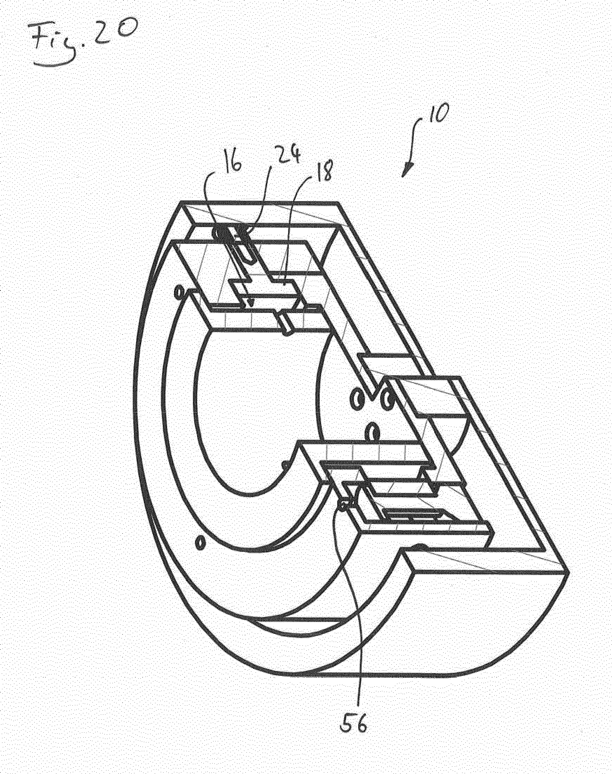

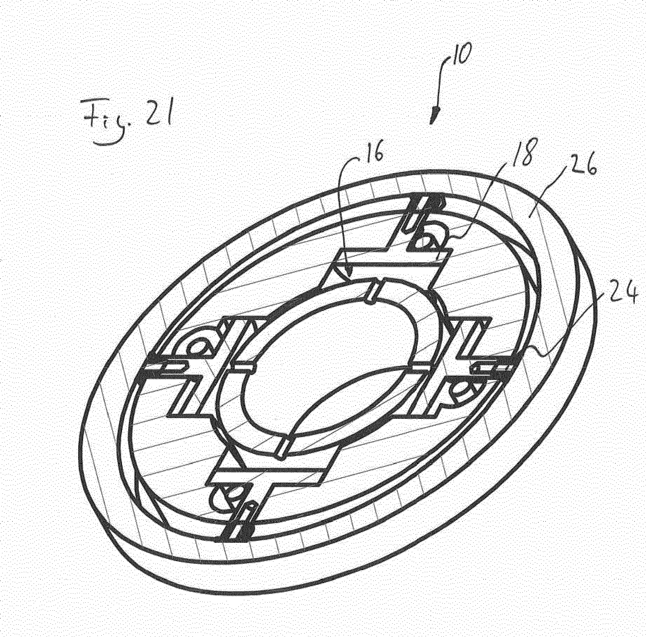

In den Figuren 12 bis 21 ist eine alternative Ausführungsform der Verdichteranordnung 10 gezeigt. Bei der in Figur 12 bis 21 gezeigten Ausführungsform liegt das radträgerseitige Getriebeteil 26 von der Rotationsachse 32 gesehen radial auswärts vom nabenseitigen Teil, insbesondere von den nabenseitigen Getriebeteilen 24, der Verdichteranordnung 10.

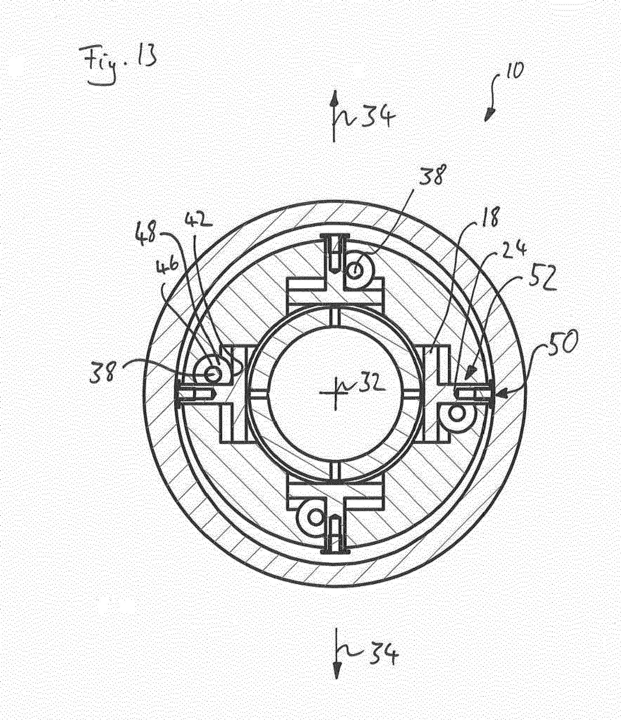

Bei der in den Figuren 12 bis 21 gezeigten Ausführungsform ist das radträgerseitige Getriebeteil 26 ebenfalls als Kurvenscheibe 28 ausgebildet. Die Kontaktpunkte 50 der nabenseitigen Getriebeteile 24 sind jedoch derart angeordnet, dass eine jeweilige Linearführung 52 der nabenseitigen Getriebeteile 24 in radialer Richtung jeweils zwischen dem Kontaktpunkt 50 und der Rotationsachse 32 angeordnet ist, dies ist besonders deutlich in Figur 13 ersichtlich.

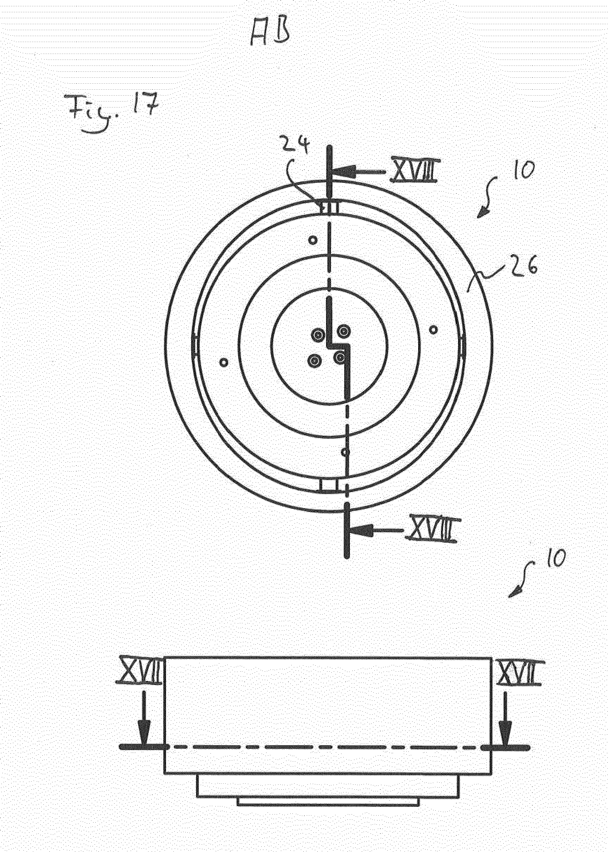

Statt einer außen liegenden Kurvenkontur 30 weist das radträgerseitige Getriebeteil 26 der Ausführungsform gemäß der Figuren 12 bis 21 also eine innenliegende Kurvenkontur 58 auf. Die Verdichteranordnung 10 der Figuren 12 bis 21 ist in den Figuren 17 bis 21 in Arbeitsbetriebslage AB dargestellt.

Wie bereits im Zusammenhang mit den Figuren 8 bis 11 erläutert, wirken in der Arbeitsbetriebslage die nabenseitigen Getriebeteile 24 mit dem radträgerseitigen Getriebeteil 26 zusammen. Durch das Zusammenwirken der Getriebeteile 24 und 26 werden die Verdichterbauteile 18 in eine oszillierende Translationsbewegung versetzt, wodurch Druckmittel aus den Kompressionsräumen 16 zu einer Reifenkavität gefördert werden kann.

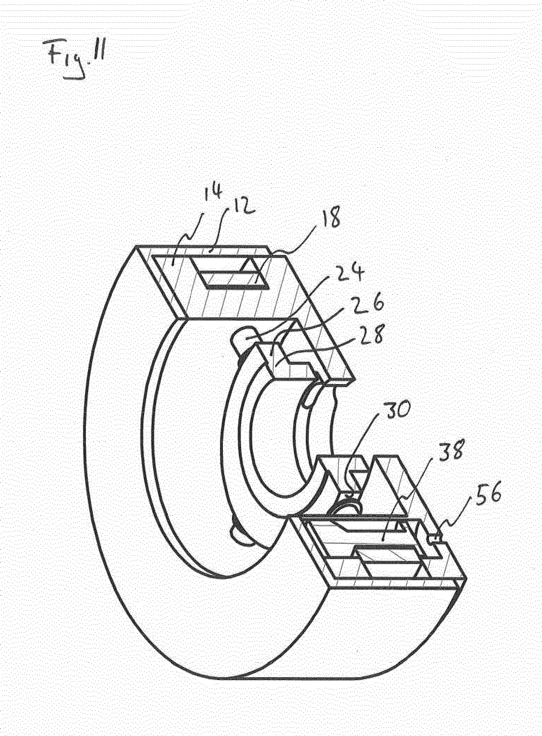

In den Figuren 12 bis 16 ist die Verdichteranordnung 10 der Figuren 11 bis 20 in einer Freilaufbetriebslage FL dargestellt. Wie bereits im Zusammenhang mit der Verdichteranordnung der Figuren 2 bis 11 beschrieben, befinden sich in der Freilaufbetriebslage FL die Kupplungselemente 38 jeweils in einer Sperrstellung, in der sie die nabenseitigen Getriebeteile 24 jeweils derart formschlüssig hintergreifen, dass die nabenseitigen Getriebeteile 24 an einem Zusammenwirken mit dem radträgerseitigen Getriebeteil 26 gehindert sind.

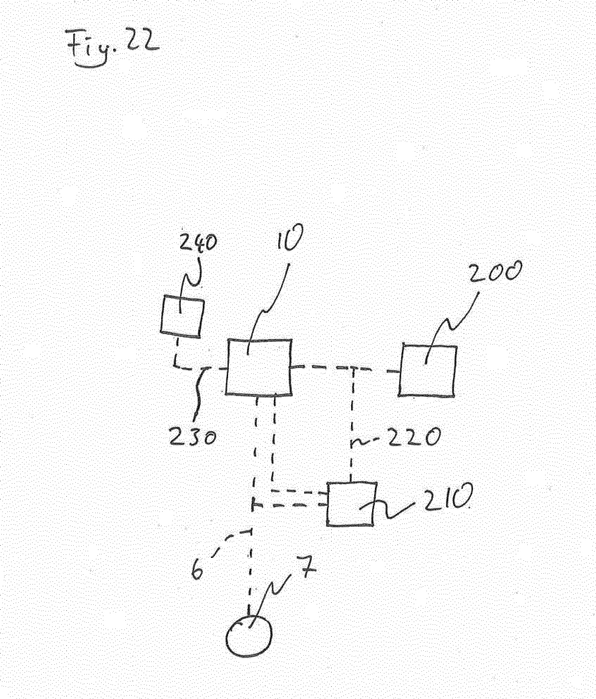

Wie in Figur 22 gezeigt, kann die Verdichteranordnung 10 allgemein mit einem Filter 200 und einer Kontrolleinrichtung 210 verbunden sein. Der Filter 200 ist dabei vorzugweise derart angeordnet, dass er fluidisch vor den Druckmitteleinlässen bzw. Lufteinlässen der Verdichteranordnung 10 angeordnet ist.

Über eine Messverbindung 220 kann die Kontrolleinrichtung 210 erfassen, wenn der Filter 200 verstopft ist. Wird eine Verstopfung des Filters 200 durch die Kontrolleinrichtung 210 erfasst, so kann der Filter dadurch gereinigt werden, dass er in umgekehrter Strömungsrichtung mit Druckmittel bzw. Luft beaufschlagt wird. In der üblichen Betriebsweise der Verdichteranordnung 10 wird Luft über den Filter 200 in Richtung der Verdichteranordnung 10 und von dort zur Reifenkavität 24 gefördert. In einem Reinigungsvorgang wird Druckmittel bzw. Luft entweder aus der Reifenkavität 24 abgelassen und in umgekehrter Strömungsrichtung durch den Filter 200 gefördert oder die Verdichteranordnung 10 nimmt ihren Betrieb auf und fördert Druckmittel statt zur Reifenkavität 24 in umgekehrter Strömungsrichtung zum Filter 200. Hierzu saugt die Verdichteranordnung 10 Druckmittel über einen zusätzlichen Einlass 230 ein, der einen weiteren Luftfilter 240 aufweist, der in ähnlicher Weise gereinigt werden kann.

Vorteilhafterweise kann die Kontrolleinrichtung 210 zur Messung und/oder Anzeige des Drucks, der Temperatur und/oder der Feuchtigkeit des Druckmittels in der Reifenkavität 24 dienen, wobei diese Funktionen unabhängig von den weiteren Funktionen der Kontrolleinrichtung 210 sind.

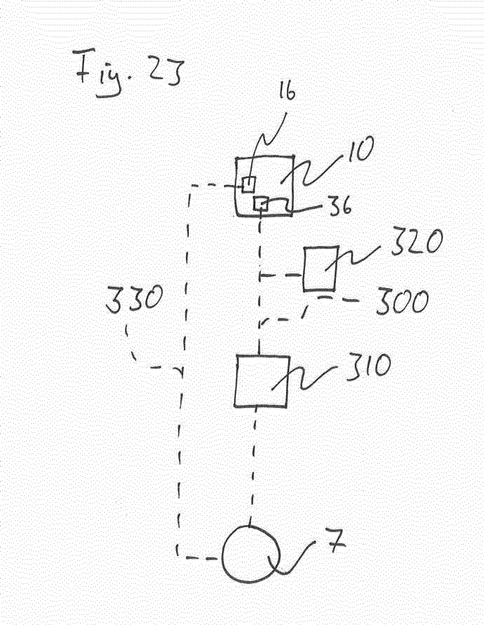

In Figur 23 ist eine beispielhafte Variante der Ansteuerung der Kupplungseinrichtung 36 dargestellt. Die Betätigung der Kupplungseinrichtung kann jedoch auch elektrisch elektromagnetisch oder elektromechanisch erfolgen. Hierzu kann elektrische Energie von der Hauptbatterie des Fahrzeugs oder von einem dort vorgesehenen Generator oder einer anderen Energiequelle, über Schleifkontakte zur Nabenseite geführt werden.

Denkbar ist jedoch auch die Anordnung eines Generators auf der Nabenseite, der elektrische Energie aus der rotatorische Relativbewegung zwischen Nabenseite und Radträgerseite gewinnt. Ebenso denkbar ist die Anordnung von Akkumulatoren auf der Nabenseite insbesondere in den Speichen der Felge 1.

Die Verdichteranordnung 10, insbesondere deren Kupplungseinrichtung 36, ist über eine Kupplungsdruckmittelleitung 300 mit der Reifenkavität 7 verbunden. In der Kupplungsdruckmittelleitung 300 ist ein Kupplungsventil 310 angeordnet. An der Kupplungsdruckmittelleitung 300 ist überdies ein Entlastungsventil 320 vorgesehen. Die Kompressionsräume 16 der Verdichteranordnung 10 sind über eine zur Förderung vorgesehenen Druckmittelleitung 330 mit der Reifenkavität 7 verbunden.

Am Kupplungsventil 310 liegt das Druckmittel der Reifenkavität 7 unter dem im Reifen herrschenden Druck an. Bei Unterschreiten eines Reifendruckschwellenwerts öffnet das Kupplungsventil 310, wodurch die Kupplungseinrichtung 36 mittels Druckmittel aus der Reifenkavität 7 betätigt wird und das nabenseitige Getriebeteil 24 in Zusammenwirkung mit dem radträgerseitigen Getriebeteil 26 gebracht wird.

Fährt das Fahrzeug, findet also eine rotatorische Relativbewegung zwischen Nabenseite und Radträgerseite statt, so wird Druckmittel aus den Kompressionsräumen 16 zur Reifenkavität 7 über die zur Förderung vorgesehene Druckmittelleitung 330 gefördert.

Die Kupplungsdruckmittelleitung 300 und die zur Förderung vorgesehenen Druckmittelleitung 330 können auch gemeinsam als eine einzige Leitung ausgeführt sein.

Bei Überschreiten eines Reifendrucksollwerts, der vorzugsweise über dem Reifendruckschwellenwert liegt, schließt das Kupplungsventil 310, wodurch die Beaufschlagung der Kupplungseinrichtung 36 mit Druckmittel unterbrochen wird. Vorzugsweise wird die Kupplungseinrichtung 36 über das Kupplungsventil 310 oder das Entlastungsventil 320 bei Überschreiten des Reifendrucksollwerts entlüftet. Damit wird sichergestellt, dass die Verdichteranordnung 10 ihren Betrieb direkt einstellt sobald ein Druckmittelsollwert in der Reifenkavität 7 erreicht ist.

Diese Betriebsart der Kupplungseinrichtung 36 ist mit sämtlichen Ausführungsformen und einzelnen Aspekten dieser Ausführungsformen der Verdichteranordnung 10 dieser Anmeldung kombinierbar.

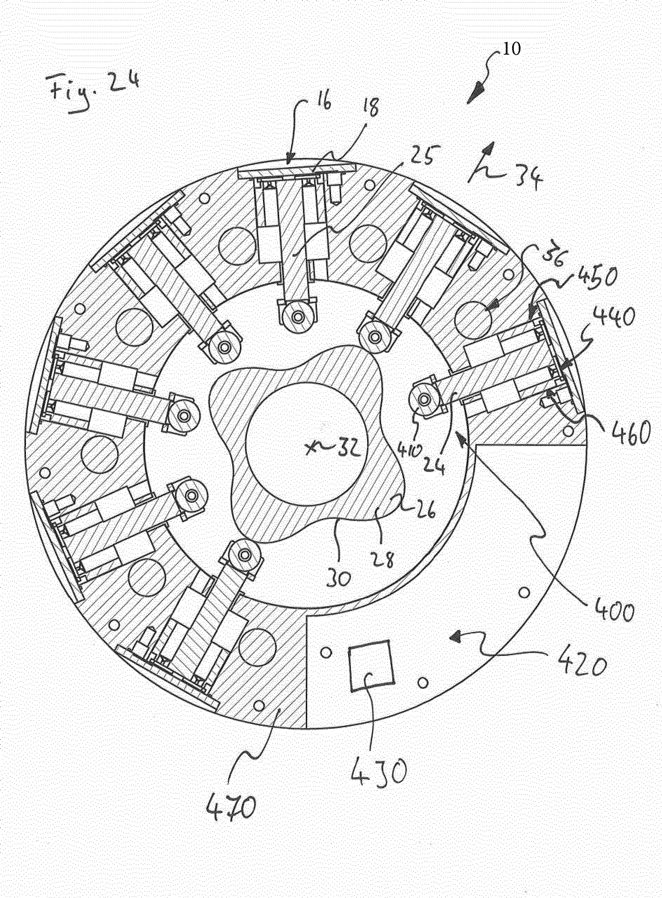

Figur 24 zeigt eine weitere Ausführungsform einer Verdichteranordnung 10 ähnlich der Ausführungsform der Figuren 2 bis 11. Die nabenseitigen Getriebeteile 24 sind dabei als Rollenstößel 400 ausgebildet. An ihrem dem radträgerseitigen Getriebeteil 26 zugewandten Ende weisen sie jeweils eine selbstschmierende Rolle 410 auf.

An den Verdichterbauteilen 18 sind jeweils Flatterventile 440 angeordnet. An den Verdichterbauteilen 18 sind auch Doppeldichtungen 450 angeordnet ist, die je ein Schmiermittelreservoir 460 des Verdichterbauteils 18 begrenzen und gleichzeitig den Kompressionsraum 16 gegen das Verdichterbauteil 18 dichten.

Die Verdichteranordnung 10 umfasst auch einen Bereich 420, der dazu dient, beispielsweise die Kontrolleinrichtung 210, den Filter 200, das Kupplungsventil 310 oder das Entlastungsventil 320 aufzunehmen. Zusätzlich kann dort eine Energiequelle 430 angeordnet sein, die beispielsweise als Akkumulator oder auch als Druckspeicher ausgeführt sein kann.

Ein nabenseitiger Teil 470 der Verdichteranordnung 10 ist weitestgehend ringförmig ausgebildet und umfasst vorliegend sämtliche in Figur 24 gezeigten Teile der Verdichteranordnung 10 außer dem radträgerseitigen Getriebeteil 26.

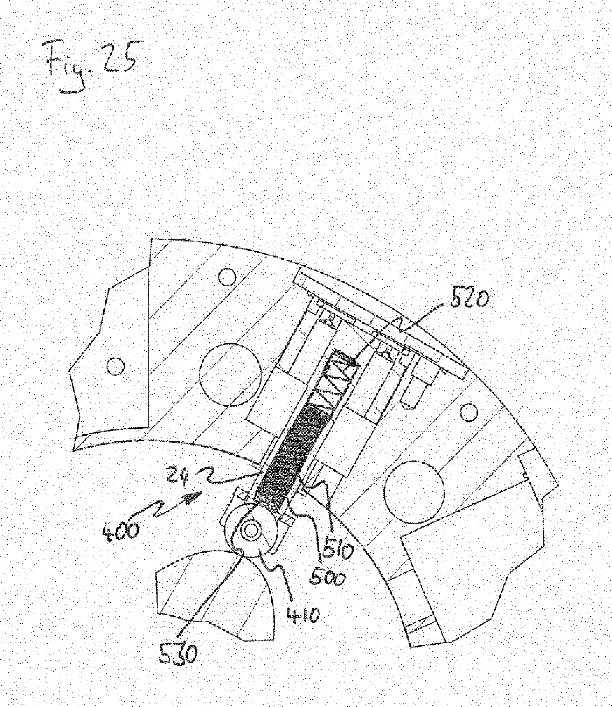

In Figur 25 ist einer der Rollenstößel 400 aus Figur 24 im Detail dargestellt. Der Rollenstößel 400 ist, wie bereits oben erwähnt, selbstschmierend ausgeführt. Der Rollenstößel 400 weist ein Schmiermittelreservoir 500 auf. Das Schmiermittelreservoir 500 ist im Schaft des Rollenstößels 400 angeordnet. In dem Schmiermittelreservoir befindet sich Schmiermittel 510, welches über eine Feder 520 in Richtung der Rolle 410 vorgespannt ist. Am Rollenseitigen Ende des Schmiermittelreservoirs 500 ist eine Auslaufsicherung 530 angeordnet. Die Auslaufsicherung 530 ist derart ausgebildet, dass selbst bei Erwärmung des Schmiermittels 510 immer nur die zur Schmierung nötige Menge austritt.

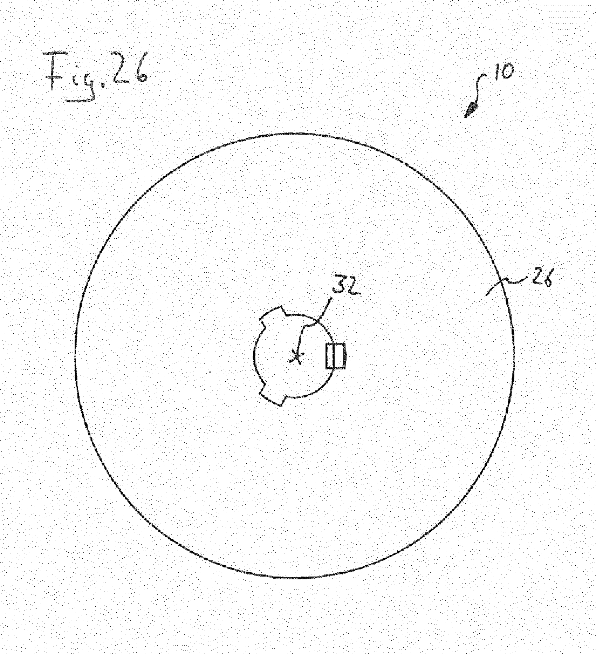

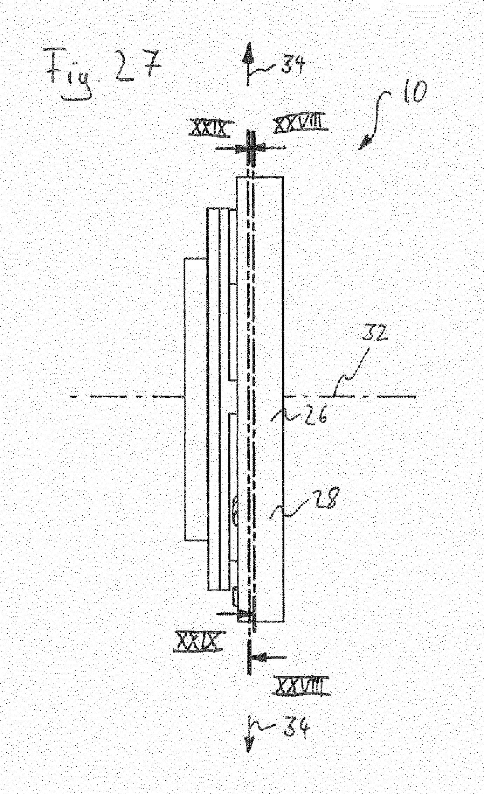

Die Figuren 26 bis 31 zeigen eine weitere Ausführungsform einer Verdichteranordnung 10, die ähnlich wie die Ausführungsform der Figuren 12 bis 21 ein radträgerseitiges Getriebeteil 26 aufweist, das von der Rotationsachse 32 gesehen radial auswärts vom nabenseitigen Teil, insbesondere von den nabenseitigen Getriebeteile 24, der Verdichteranordnung 10 angeordnet ist.

Bei der in den Figuren 26 bis 31 gezeigten Ausführungsform ist das radträgerseitige Getriebeteil 26 ebenfalls als Kurvenscheibe 28 ausgebildet. Die Kurvenscheibe 28 ist mit einer innenliegenden Kurvenkontur 58 ausgebildet. Die Kontaktpunkte 50 der nabenseitigen Getriebeteile 24 mit der innenliegenden Kurvenkontur 58 sind derart angeordnet, dass eine jeweilige Linearführung 52 der nabenseitigen Getriebeteile 24 in radialer Richtung jeweils zwischen dem Kontaktpunkt 50 und der Rotationsachse 32 angeordnet ist.

In der in den Figuren 26 bis 31 gezeigten Arbeitsbetriebslage wirken die nabenseitigen Getriebeteile 24 mit dem radträgerseitigen Getriebeteil 26 zusammen. Durch das Zusammenwirken der Getriebeteile 24 und 26 werden die Verdichterbauteile 18 in eine oszillierende Translationsbewegung versetzt, wodurch Druckmittel aus den Kompressionsräumen 16 zur Reifenkavität 7 gefördert werden kann.

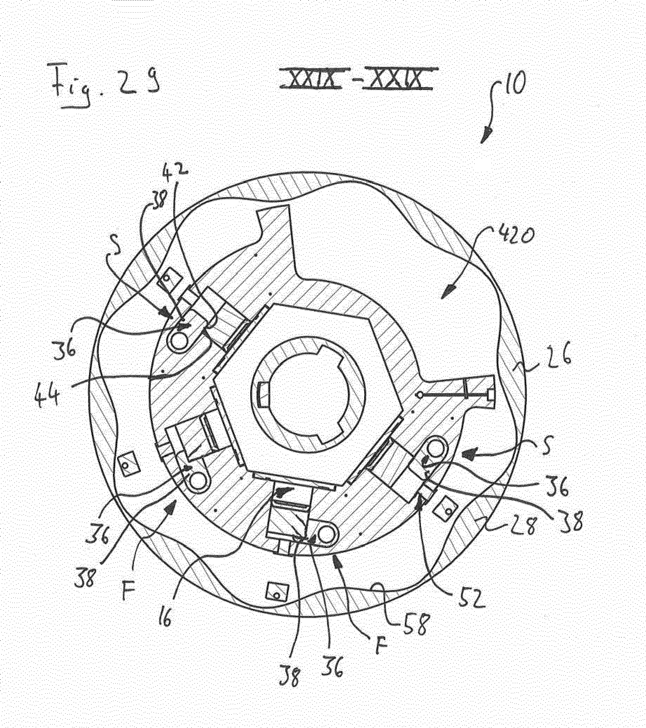

In Figur 29 sind die Kupplungselemente 38 teilweise in der Sperrstellung und teilweise in der Freigabestellung gezeigt. Die Kupplungselemente 38 in der Sperrstellung sind mit Pfeilen mit den Bezugszeichen S gekennzeichnet. Die Kupplungselemente 38 in der Freigabestellung sind mit Pfeilen mit den Bezugszeichen F gekennzeichnet.

In der Sperrstellung hintergreifen die Kupplungselemente 38 die nabenseitigen Getriebeteile 24 jeweils derart formschlüssig, dass die nabenseitigen Getriebeteile 24 an einem Zusammenwirken mit dem radträgerseitigen Getriebeteil 26 gehindert sind. Hierbei liegt bei der Ausführungsform der Figuren 26 bis 31 ein riegelartiger Sperrabschnitt 42 an dem Anschlagsabschnitt 44 der nabenseitigen Getriebeteile 24 an.

Um in die Freigabestellung überführt zu werden, werden die Kupplungselemente 38 in Richtung der Rotationsachse 32 über Druckmittelbeaufschlagung bewegt. Die Kupplungselemente 38 sind derart vorgespannt, dass sie, wenn Sie nicht mit Druckmittel beaufschlagt sind in die Sperrstellung übergehen.

Die nabenseitigen Getriebeteile 24 sind als Rollenstößel 400 ausgebildet. An ihrem dem radträgerseitigen Getriebeteil 26 zugewandten Ende weisen sie jeweils eine selbstschmierende Rolle 410 auf, wie bereits im Detail mit Blick auf Figur 25 beschrieben.

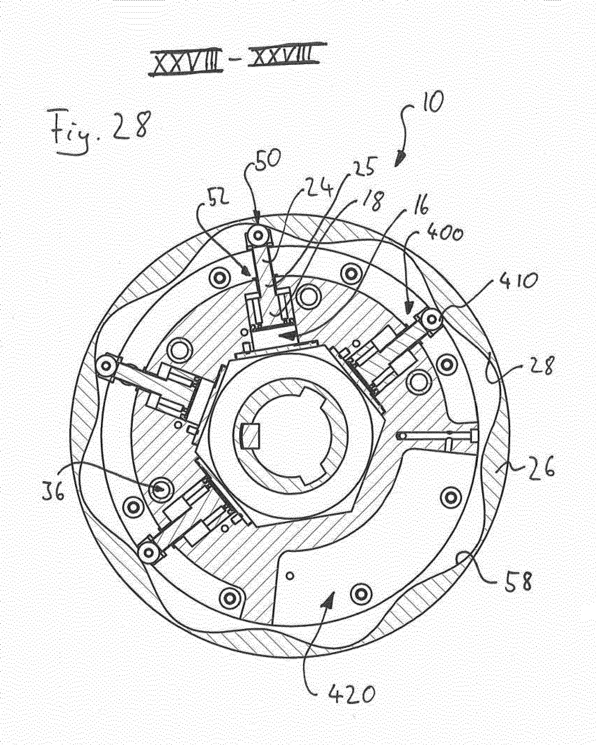

In Fig. 28 ist die Verdichteranordnung 10 in einer Schnittansicht entlang der Linie XXVIII - XXVIII gezeigt.

In Fig. 29 ist die Verdichteranordnung 10 in einer Schnittansicht entlang der Linie XXIX - XXIX gezeigt.

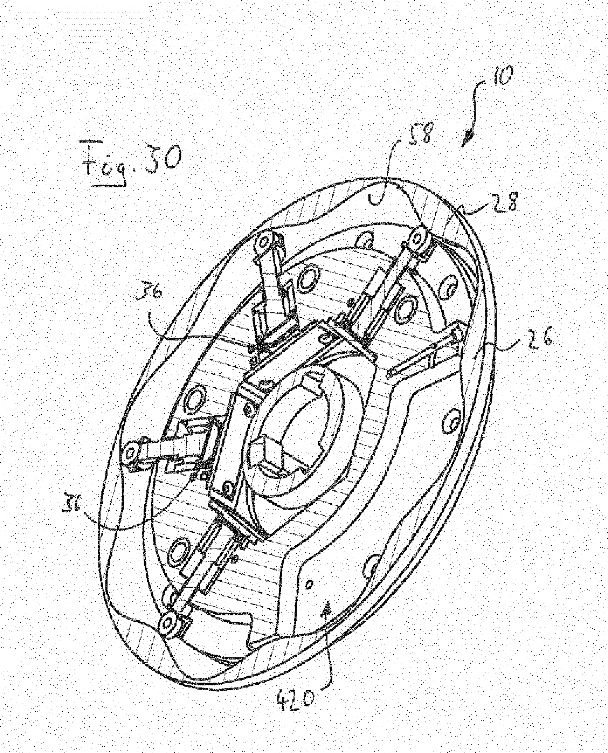

In Figur 30 ist die Schnittansicht aus Figur 29 in einer perspektivischen Darstellung gezeigt.

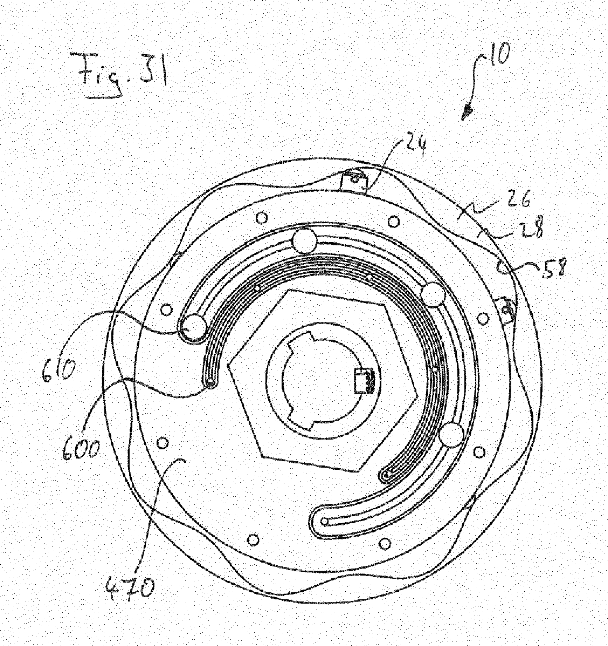

In Fig. 31 ist die Verdichteranordnung 10 in einer der Darstellung von Fig. 26 entsprechenden Ansicht, jedoch von der gegenüberliegenden Seite gesehen, gezeigt. Am nabenseitigen Teil 470 sind Druckmittelauslässe 600 sichtbar, über die von der Verdichteranordnung 10 unter Druck gesetztes Druckmittel zu Reifenkavität 7 geführt wird. Am nabenseitigen Teil 470 sind auch Druckmitteleinlässe 610 sichtbar, die mit dem Kupplungsventil 310 verbindbar sind, so dass Druckmittel von dem Kupplungsventil 310 zur über die Druckmitteleinlässe 610 zur Kupplungseinrichtung 36 führbar ist.

## Patentansprüche

1. Verdichteranordnung (10) zur Druckmittelversorgung einer Reifenkavität (7) eines Reifens eines auf einer Radnabe (4) montierbaren Fahrzeugrads, wobei die Radnabe (4) um eine Rotationsachse (32) drehbar an einem Radträger (3) gelagert ist, wobei die Verdichteranordnung (10) wenigstens einen nabenseitigen Kompressionsraum (16) umfasst, dessen Volumen durch eine translatorische Bewegung eines Verdichterbauteils (18) veränderbar ist, wobei durch eine Volumenverminderung des Kompressionsraums (16) ein in die Reifenkavität zu leitendes Druckmittel unter Druck setzbar ist, und wobei die Verdichteranordnung (10) ein Getriebe (20), vorzugsweise ein Kurvengetriebe, umfasst, das eingerichtet ist, um durch ein Zusammenwirken eines radträgerseitigen Getriebeteils (26) mit einem nabenseitigen Getriebeteil (24) eine Rotationsbewegung zwischen Radträgerseite und Radnabenseite in eine oszillierende translatorische Bewegung des Verdichterbauteils (18) umzuwandeln, wobei die translatorische Bewegung des Verdichterbauteils (18) wenigstens teilweise, vorzugsweise vollständig, in einer zur Rotationsachse (32) orthogonal verlaufenden radialen Richtung (34) verläuft, wobei die Verdichteranordnung eine Kupplungseinrichtung (36) umfasst, mittels welcher das nabenseitige Getriebeteil (24) in Zusammenwirkung mit dem radträgerseitigen Getriebeteil (26) bringbar ist, wobei die Kupplungseinrichtung (36) pneumatisch, magnetisch, elektrisch oder elektromechanisch betätigbar ist, ein nabenseitiges Kupplungselement (38) umfasst, das, vorzugsweise pneumatisch, magnetisch, elektrisch oder elektromechanisch, von einer Sperrstellung in eine Freigabestellung und/oder andersherum überführbar ist, wobei das nabenseitige Getriebeteil (24) mit dem radträgerseitigen Getriebeteil (26) zusammenwirkt, wenn sich das Kupplungselement (38) in der Freigabestellung befindet, und wobei das nabenseitige Getriebeteil (24) an dem Zusammenwirken mit dem radträgerseitigen Getriebeteil (26) gehindert ist, wenn sich das Kupplungselement (38) in der Sperrstellung befindet,
**dadurch gekennzeichnet, dass**
in der Sperrstellung das Kupplungselement (38) das nabenseitige Getriebeteil (24) derart formschlüssig hintergreift, dass das nabenseitige Getriebeteil (24) an dem Zusammenwirken mit dem radseitigen Getriebeteil (26) gehindert ist.

2. Verdichteranordnung (10) nach Anspruch 1,
**dadurch gekennzeichnet, dass**
das radträgerseitige Getriebeteil (26) eine Scheibenkurve (28) und/oder eine Scheibennutkurve und/oder eine Scheibenwulstkurve umfasst.

3. Verdichteranordnung (10) nach einem oder mehreren der vorangegangenen Ansprüche,
**dadurch gekennzeichnet, dass**
das nabenseitige Getriebeteil (24) einen Stößelabtrieb (25) umfasst; und/oder
der Stößelabtrieb (25) über eine Innenkontur der Scheibenkurve (28) antreibbar ist; und/oder
der Stößelabtrieb (25) über eine Außenkontur (30) der Scheibenkurve (28) antreibbar ist.

4. Verdichteranordnung (10) nach einem oder mehreren der vorangegangenen Ansprüche,
**dadurch gekennzeichnet, dass**
der Stößelabtrieb (25) in radialer Richtung (34) gesehen zwischen der Rotationsachse (32) und einem Kontaktpunkt (50) mit der Scheibenkurve (28), der Scheibennutkurve und/oder der Scheibenwulstkurve eine Linearführung (52) aufweist; und/oder
der Kontaktpunkt (50) des Stößelabtriebs (25) mit der Scheibenkurve (28), der Scheibennutkurve und/oder der Scheibenwulstkurve in radialer Richtung (34) gesehen zwischen der Rotationsachse (32) und der Linearführung (52) des Stößelabtriebs (25) liegt.

5. Verdichteranordnung (10) nach einem oder mehreren der vorangegangenen Ansprüche,
**dadurch gekennzeichnet, dass**
das Verdichterbauteil (18) einstückig mit dem nabenseitigen Getriebeteil (24) ausgebildet ist.

6. Verdichteranordnung (10) nach einem oder mehreren der vorangegangenen Ansprüche,
**dadurch gekennzeichnet, dass**
das nabenseitige Kupplungselement (38) in die Sperrstellung, insbesondere über eine Feder (49), vorgespannt ist; und/oder
das nabenseitige Getriebeteil (24) in eine Stellung vorgespannt ist, in der es mit dem radträgerseitigen Getriebeteil (26) zusammenwirkt; und/oder das nabenseitige Kupplungselement (38) derart ausgestaltet ist, dass es, wenn es in die Sperrstellung übergeht, das nabenseitige Getriebeteil (24) in eine Position drängt, in der es unabhängig von der Stellung des radträgerseitigen Getriebeteils (26) keinen direkten Kontakt mit dem radträgerseitigen Getriebeteil (26) hat.

7. Verdichteranordnung (10) nach einem oder mehreren der vorangegangenen Ansprüche,
**dadurch gekennzeichnet, dass**
das nabenseitige Kupplungselement (38) einen Sperrabschnitt (42) umfasst, der in der Sperrstellung an einem Anschlagsabschnitt (44) des nabenseitigen Getriebeteils (24) anliegt; und/oder
der Sperrabschnitt (42) des nabenseitige Kupplungselement (38) graduell in einen Freigabeabschnitt (46) des nabenseitigen Kupplungselements (38) übergeht, wobei der Freigabeabschnitt (46) in Richtung der translatorischen Bewegung des Verdichterbauteils (18) gesehen versetzt zu dem Sperrabschnitt (42) angeordnet ist; und/oder
die Kupplungseinrichtung (36) über eine Druckleitung (6, 300, 330) mittels Druckmittel aus der Reifenkavität (7) betätigbar ist, insbesondere wobei das Kupplungselement (38) mittels Druckmittel aus der Reifenkavität (7) von der Sperrstellung in die Freigabestellung überführbar ist.

8. Verdichteranordnung (10) nach einem oder mehreren der vorangegangenen Ansprüche,
**dadurch gekennzeichnet, dass**
ein Kupplungsventil (310) fluidisch zwischen Kupplungseinrichtung (36) und Reifenkavität vorgesehen ist, an dem das Druckmittel aus der Reifenkavität (7) anliegt und welches bei Unterschreiten eines Reifendruckschwellenwerts öffnet, wodurch die Kupplungseinrichtung (36) mittels Druckmittel aus der Reifenkavität (7) betätigt wird und das nabenseitige Getriebeteil (24) in Zusammenwirkung mit dem radträgerseitigen Getriebeteil (26) gebracht wird; und/oder
das Kupplungsventil (310) derart ausgebildet ist, dass es bei Überschreiten eines Reifendrucksollwerts, vorzugsweise der über dem Reifendruckschwellenwert liegt, schließt, wodurch die Beaufschlagung der Kupplungseinrichtung (36) mit Druckmittel unterbrochen wird, vorzugsweise wobei das Kupplungsventil (310) oder ein Entlastungsventil (320) derart ausgebildet ist, dass bei Überschreiten des Reifendrucksollwerts die Kupplungseinrichtung (36) entlüftet wird.

9. Verdichteranordnung (10) nach einem oder mehreren der vorangegangenen Ansprüche,
**dadurch gekennzeichnet, dass**
sie mehrere Verdichterbauteile (18) umfasst, die vorzugsweise in einer Umfangsrichtung gleichmäßig um die Rotationsachse (32) verteilt angeordnet sind; und/oder
an dem Verdichterbauteil (18) ein Flatterventil (440) angeordnet ist; und/oder
an dem Verdichterbauteil (18) eine Doppeldichtung (450) angeordnet ist, die ein Schmiermittelreservoir (460) des Verdichterbauteils (18) begrenzt und gleichzeitig den Kompressionsraum (16) gegen das Verdichterbauteil (18) dichtet; und/oder
das Flatterventil (440) einstückig mit wenigstens einem Teil der Doppeldichtung (450) ausgebildet ist.

10. Verdichteranordnung (10) nach einem oder mehreren der vorangegangenen Ansprüche,
**dadurch gekennzeichnet, dass**
ein nabenseitiger Teil (470) der Verdichteranordnung (10) weitestgehend ringförmig ausgebildet ist.

11. Verdichteranordnung (10) nach einem oder mehreren der vorangegangenen Ansprüche,
**dadurch gekennzeichnet, dass**
das nabenseitige Getriebeteil (24) einen Rollenstößel (400) umfasst.

12. Verdichteranordnung (10) nach dem vorangegangenen Anspruch,
**dadurch gekennzeichnet, dass**
der Rollenstößel (400) selbstschmierend ist, vorzugsweise mit einem Schmiermittelreservoir (500) in einem Schaft des Rollenstößels (400).

13. Verdichteranordnung (10) nach dem vorangegangenen Anspruch,
**dadurch gekennzeichnet, dass**
Schmiermittel (510) in dem Schmiermittelreservoir (500) über eine Vorspanneinrichtung (520) in Richtung einer Rolle (410) des Rollenstößels (400) vorgespannt ist; und/oder
das Schmiermittelreservoir (500) rollenseitig eine Auslaufsicherung (530) umfasst.

14. Verdichteranordnung (10) nach einem oder mehreren der vorangegangenen Ansprüche,
**dadurch gekennzeichnet, dass**
sie eine Einrichtung (210) zur Messung und/oder Anzeige des Drucks, der Temperatur und/oder der Feuchtigkeit des Druckmittels in der Reifenkavität (7) umfasst, vorzugsweise die über die Druckmittelleitung (6) mit der Reifenkavität (7) verbindbar ist.

15. Verdichteranordnung (10) nach einem oder mehreren der vorangegangenen Ansprüche,
**dadurch gekennzeichnet, dass**
sie druckmitteleinlassseitig mit einem Filter (200) verbunden ist; und/oder sie ausgebildet ist, um Druckmittel aus der Reifenkavität (7) oder über Förderung durch die Verdichteranordnung (10) zum Reinigen des Filters (200) zu verwenden; und/oder
das nabenseitige Kupplungselement (38) einen riegelartigen Sperrabschnitt (42) aufweist.

## Claims

1. Compressor assembly (10) for supplying pressure medium to a tyre cavity (7) of a tyre of a vehicle wheel which can be mounted on a wheel hub (4), wherein the wheel hub (4) is mounted on a wheel carrier (3) so as to be rotatable about an axis of rotation (32), wherein the compressor assembly (10) comprises at least one hub-side compression chamber (16), the volume of which can be changed by a translational movement of a compressor component (18), wherein a pressure medium to be conducted into the tyre cavity can be set under pressure by a reduction in volume of the compression chamber (16), and wherein the compressor assembly (10) comprises a transmission (20), preferably a cam mechanism, which is configured, by interaction of a wheel-carrier-side transmission part (26) with a hub-side transmission part (24), to convert a rotational movement between the wheel-carrier side and the wheel-hub side into an oscillating translational movement of the compressor component (18), wherein the translational movement of the compressor component (18) runs at least partially, preferably completely, in a radial direction (34) running orthogonally to the axis of rotation (32), wherein the compressor assembly comprises a coupling device (36) by means of which the hub-side transmission part (24) can be brought into interaction with the wheel-carrier-side transmission part (26), wherein the coupling device (36) is actuable pneumatically, magnetically, electrically or electromechanically, and comprises a hub-side coupling element (38) which can be transferred, preferably pneumatically, magnetically, electrically or electromechanically, from a blocking position into a release position, and/or vice versa, wherein the hub-side transmission part (24) interacts with the wheel-carrier-side transmission part (26) when the coupling element (38) is in the release position, and wherein the hub-side transmission part (24) is prevented from interacting with the wheel-carrier-side transmission part (26) when the coupling element (38) is in the blocking position,
**characterized in that**,
in the blocking position, the coupling element (38) reaches behind the hub-side transmission part (24) in a form-fitting manner such that the hub-side transmission part (24) is prevented from interacting with the wheel-side transmission part (26).

2. Compressor assembly (10) according to Claim 1,
**characterized in that**
the wheel-carrier-side transmission part (26) comprises a cam disc (28) and/or a grooved cam disc and/or a beaded cam disc.

3. Compressor assembly (10) according to one or more of the preceding claims,
**characterized in that**
the hub-side transmission part (24) comprises a tappet output (25);
and/or
the tappet output (25) can be driven via an inner contour of the cam disc (28); and/or
the tappet output (25) can be driven via an outer contour (30) of the cam disc (28).

4. Compressor assembly (10) according to one or more of the preceding claims,
**characterized in that**
the tappet output (25), as seen in the radial direction (34), has a linear guide (52) between the axis of rotation (32) and a contact point (50) with the cam disc (28), the grooved cam disc and/or the beaded cam disc; and/or
the contact point (50) of the tappet output (25) with the cam disc (28), the grooved cam disc and/or the beaded cam disc lies, as seen in the radial direction (34), between the axis of rotation (32) and the linear guide (52) of the tappet output (25).

5. Compressor assembly (10) according to one or more of the preceding claims,
**characterized in that**
the compressor component (18) is formed integrally with the hub-side transmission part (24).

6. Compressor assembly (10) according to one or more of the preceding claims,
**characterized in that**
the hub-side coupling element (38) is prestressed into the blocking position, in particular via a spring (49); and/or
the hub-side transmission part (24) is prestressed into a position in which it interacts with the wheel-carrier-side transmission part (26); and/or the hub-side coupling element (38) is configured in such a manner that, when it transfers into the blocking position, it forces the hub-side transmission part (24) into a position in which it does not have any direct contact with the wheel-carrier-side transmission part (26) irrespective of the position of the wheel-carrier-side transmission part (26).

7. Compressor assembly (10) according to one or more of the preceding claims,
**characterized in that**
the hub-side coupling element (38) comprises a blocking portion (42) which, in the blocking position, lies against a stop portion (44) of the hub-side transmission part (24); and/or
the blocking portion (42) of the hub-side coupling element (38) gradually merges into a release portion (42) of the hub-side coupling element (38), wherein the release portion (46) is arranged offset with respect to the blocking portion (42), as seen in the direction of the translational movement of the compressor component (18); and/or
the coupling device (36) is actuable by means of pressure medium from the tyre cavity (7) via a pressure line (6, 300, 330), in particular wherein the coupling element (38) can be transferred from the blocking position into the release position by means of pressure medium from the tyre cavity (7).

8. Compressor assembly (10) according to one or more of the preceding claims,
**characterized in that**
a coupling valve (310) is fluidically provided between the coupling device (36) and the tyre cavity, against which coupling valve the pressrue medium from the tyre cavity (7) lies and which opens when the tyre pressure falls below a threshold value, as a result of which the coupling device (36) is actuated by means of pressure medium from the tyre cavity (7) and the hub-side transmission part (24) is brought into interaction with the wheel-carrier-side transmission part (26); and/or
the coupling valve (310) is designed in such a manner that it closes when a tyre pressure desired value, which is preferably above the tyre pressure threshold value, is exceeded, as a result of which the action upon the coupling device (36) with pressure medium is interrupted, preferably wherein the coupling valve (310) or a relief valve (320) is designed in such a manner that the coupling device (36) is vented when the tyre pressure desired value is exceeded.

9. Compressor assembly (10) according to one or more of the preceding claims,
**characterized in that**
it comprises a plurality of compressor components (18) which are preferably distributed uniformly in a circumferential direction about the axis of rotation (32); and/or
a flutter valve (440) is arranged on the compressor component (18);
and/or
a double seal (450) is arranged on the compressor component (18), the double seal bounding a lubricant reservoir (460) of the compressor component (18) and at the same time sealing the compression chamber (16) from the compressor component (18); and/or the flutter valve (440) is formed integrally with at least a part of the double seal (450).

10. Compressor assembly (10) according to one or more of the preceding claims,
**characterized in that**
a hub-side part (470) of the compressor assembly (10) is very substantially annular.

11. Compressor assembly (10) according to one or more of the preceding claims,
**characterized in that**
the hub-side transmission part (24) comprises a roller tappet (400).

12. Compressor assembly (10) according to the preceding claim,
**characterized in that**
the roller tappet (400) is self-lubricating, preferably with a lubricant reservoir (500) in a shaft of the roller tappet (400).

13. Compressor assembly (10) according to the preceding claim,
**characterized in that**
lubricant (510) in the lubricant reservoir (500) is prestressed in the direction of a roller (410) of the roller tappet (400) via a prestressing device (520); and/or
the lubricant reservoir (500) comprises a leak prevention means (530) on the roller side.

14. Compressor assembly (10) according to one or more of the preceding claims,
**characterized in that**
it comprises a device (210) for measuring and/or displaying the pressure, the temperature and/or the humidity of the pressure medium in the tyre cavity (7), preferably which is connectable to the tyre cavity (7) via the pressure medium line (6).

15. Compressor assembly (10) according to one or more of the preceding claims,
**characterized in that**
it is connected on the pressure-medium-inlet side to a filter (200); and/or
it is designed to use pressure medium from the tyre cavity (7) or supplied by the compressor assembly (10) for cleaning the filter (200); and/or
the hub-side coupling element (38) has a bolt-like blocking portion (42).

## Revendications

1. Ensemble compresseur (10) servant à alimenter en fluide sous pression une cavité (7) d'un pneu d'une roue de véhicule pouvant être montée sur un moyeu de roue (4), le moyeu de roue (4) étant monté sur un support de roue (3) de manière à pouvoir tourner autour d'un axe de rotation (32), l'ensemble compresseur (10) comportant au moins une chambre de compression (16) côté moyeu, dont le volume peut être modifié par un mouvement de translation d'un composant de compresseur (18), un fluide sous pression à guider dans la cavité de pneu pouvant être mis sous pression par une réduction de volume de la chambre de compression (16), et l'ensemble compresseur (10) comportant une transmission (20), de préférence une transmission à came, qui est conçue, par une coopération d'une partie de transmission (26) côté support de roue avec une partie de transmission (24) côté moyeu, pour convertir un mouvement rotatif entre le côté support de roue et le côté moyeu de roue en un mouvement de translation oscillant du composant de compresseur (18), le mouvement de translation du composant de compresseur (18) s'étendant au moins partiellement, de préférence complètement, dans une direction radiale (34) s'étendant perpendiculairement à l'axe de rotation (32), l'ensemble compresseur comportant un dispositif d'accouplement (36) au moyen duquel la partie de transmission (24) côté moyeu peut être amenée à coopérer avec la partie de transmission (26) côté support de roue, le dispositif d'accouplement (36) pouvant être actionné de manière pneumatique, magnétique, électrique ou électromécanique, comportant un élément d'accouplement (38) côté moyeu, qui peut être transféré d'une position de blocage à une position de libération et/ou inversement, de préférence de manière pneumatique, magnétique, électrique ou électromécanique, la partie de transmission (24) côté moyeu coopérant avec la partie de transmission (26) côté support de roue lorsque l'élément d'accouplement (38) se trouve dans la position de libération, et la partie de transmission (24) côté moyeu étant empêchée de coopérer avec la partie de transmission (26) côté support de roue lorsque l'élément d'accouplement (38) se trouve dans la position de blocage,
**caractérisé en ce que**,
dans la position de blocage, l'élément d'accouplement (38) vient en prise par l'arrière avec complémentarité de forme avec la partie de transmission (24) côté moyeu de telle sorte que la partie de transmission (24) côté moyeu est empêchée de coopérer avec la partie de transmission (26) côté roue.

2. Ensemble compresseur (10) selon la revendication 1,
**caractérisé en ce que**
la partie de transmission (26) côté support de roue comporte une came en disque (28) et/ou une came en disque à rainure et/ou une came en disque à bourrelet.

3. Ensemble compresseur (10) selon l'une ou plusieurs des revendications précédentes,
**caractérisé en ce que**
la partie de transmission (24) côté moyeu comporte une sortie formant poussoir (25) ; et/ou
la sortie formant poussoir (25) peut être entraînée par le biais d'un contour intérieur de la came en disque (28) ; et/ou
la sortie formant poussoir (25) peut être entraînée par le biais d'un contour extérieur (30) de la came en disque (28) .

4. Ensemble compresseur (10) selon l'une ou plusieurs des revendications précédentes,
**caractérisé en ce que**
la sortie formant poussoir (25) comprend, vue dans la direction radiale (34), un guide linéaire (52) entre l'axe de rotation (32) et un point de contact (50) avec la came en disque (28), la came en disque à rainure et/ou la came en disque à bourrelet ; et/ou
le point de contact (50) de la sortie formant poussoir (25) avec la came en disque (28), la came en disque à rainure et/ou la came en disque à bourrelet se situe, vu dans la direction radiale (34), entre l'axe de rotation (32) et le guide linéaire (52) de la sortie formant poussoir (25).

5. Ensemble compresseur (10) selon l'une ou plusieurs des revendications précédentes,
**caractérisé en ce que**
l'ensemble compresseur (18) est réalisé d'une seule pièce avec la partie de transmission (24) côté moyeu.

6. Ensemble compresseur (10) selon l'une ou plusieurs des revendications précédentes,
**caractérisé en ce que**
l'élément d'accouplement (38) côté moyeu est précontraint dans la position de blocage, en particulier par le biais d'un ressort (49) ; et/ou
la partie de transmission (24) côté moyeu est précontrainte dans une position dans laquelle elle coopère avec la partie de transmission (26) côté support de roue ; et/ou
l'élément d'accouplement (38) côté moyeu est configuré de telle sorte que, lorsqu'il passe à la position de blocage, il pousse la partie de transmission (24) côté moyeu dans une position dans laquelle elle n'a aucun contact direct avec la partie de transmission (26) côté support de roue indépendamment de la position de la partie de transmission (26) côté support de roue.

7. Ensemble compresseur (10) selon l'une ou plusieurs des revendications précédentes,
**caractérisé en ce que**
l'élément d'accouplement (38) côté moyeu comporte une partie de blocage (42) qui s'appuie contre une partie de butée (44) de la partie de transmission (24) côté moyeu dans la position de blocage ; et/ou
la partie de blocage (42) de l'élément d'accouplement (38) côté moyeu se prolonge graduellement par une partie de libération (46) de l'élément d'accouplement (38) côté moyeu, la partie de libération (46) étant, vue dans la direction du mouvement de translation du composant de compresseur (18), disposée de manière décalée par rapport à la partie de blocage (42) ; et/ou
le dispositif d'accouplement (36) pouvant être actionné au moyen d'un fluide sous pression provenant de la cavité de pneu (7) par le biais d'une conduite sous pression (6, 300, 330), l'élément d'accouplement (38) pouvant en particulier être transféré de la position de blocage à la position de libération au moyen d'un fluide sous pression provenant de la cavité de pneu (7).

8. Ensemble compresseur (10) selon l'une ou plusieurs des revendications précédentes,
**caractérisé**
**en ce qu'**une soupape d'accouplement (310) est prévue fluidiquement entre le dispositif d'accouplement (36) et la cavité de pneu, soupape contre laquelle le fluide sous pression provenant de la cavité de pneu (7) s'applique et laquelle s'ouvre lorsque l'on passe au-dessous d'une valeur seuil de pression de pneu, de sorte que le dispositif d'accouplement (36) soit activé au moyen d'un fluide sous pression provenant de la cavité de pneu (7) et que la partie de transmission (24) côté moyeu soit amenée à coopérer avec la partie de transmission (26) côté support de roue ; et/ou
**en ce que** la soupape d'accouplement (310) est réalisée de telle sorte qu'elle se ferme lorsqu'une valeur de consigne de pression de pneu, qui est de préférence supérieure à la valeur seuil de pression de pneu, est dépassée, de sorte que la sollicitation du dispositif d'accouplement (36) par du fluide sous pression soit interrompue, la soupape d'accouplement (310) ou une soupape de décharge (320) étant réalisée de préférence de telle sorte que le dispositif d'accouplement (36) soit purgé en cas de dépassement de la valeur de consigne de pression de pneu.

9. Ensemble compresseur (10) selon l'une ou plusieurs des revendications précédentes,
**caractérisé**
**en ce qu'**il comporte plusieurs composants de compresseur (18) qui sont disposés de préférence de manière répartie uniformément autour de l'axe de rotation (32) dans une direction périphérique ; et/ou
**en ce qu'**une soupape à languette (440) est disposée sur le composant de compresseur (18) ; et/ou **en ce qu'**un joint d'étanchéité double (450) est disposé sur le composant de compresseur (18), lequel joint d'étanchéité limite un réservoir de lubrifiant (460) du composant de compresseur (18) et réalise simultanément l'étanchéité de la chambre de compression (16) par rapport au composant de compresseur (18) ; et/ou **en ce que** la soupape à languette (440) est réalisée d'une seule pièce avec au moins une partie du joint d'étanchéité double (450).

10. Ensemble compresseur (10) selon l'une ou plusieurs des revendications précédentes,
**caractérisé en ce**
**qu'**une partie (470) côté moyeu de l'ensemble compresseur (10) est réalisée de manière annulaire dans une très large mesure.

11. Ensemble compresseur (10) selon l'une ou plusieurs des revendications précédentes,
**caractérisé en ce que**
la partie de transmission (24) côté moyeu comporte un poussoir à galet (400).

12. Ensemble compresseur (10) selon la revendication précédente,
**caractérisé en ce que**
le poussoir à galet (400) est autolubrifiant, de préférence avec un réservoir de lubrifiant (500) dans une tige du poussoir à galet (400).

13. Ensemble compresseur (10) selon la revendication précédente,
**caractérisé en ce que**
le lubrifiant (510) dans le réservoir de lubrifiant (500) est précontraint par le biais d'un dispositif de précontrainte (520) dans la direction d'un galet (410) du poussoir à galet (400) ; et/ou
le réservoir de lubrifiant (500) comporte une protection anti-fuite (530) côté galet.

14. Ensemble compresseur (10) selon l'une ou plusieurs des revendications précédentes,
**caractérisé en ce**
**qu'**il comporte un dispositif (210) pour la mesure et/ou l'affichage de la pression, de la température et/ou de l'humidité du fluide sous pression dans la cavité de pneu (7), lequel dispositif peut de préférence être relié à la cavité de pneu (7) par le biais de la conduite de fluide sous pression (6).

15. Ensemble compresseur (10) selon l'une ou plusieurs des revendications précédentes,
**caractérisé**
**en ce qu'**il est relié à un filtre (200) côté entrée de fluide sous pression ; et/ou
**en ce qu'**il est réalisé pour utiliser du fluide sous pression provenant de la cavité de pneu (7) ou par refoulement au moyen de l'ensemble compresseur (10) pour le nettoyage du filtre (200) ; et/ou
**en ce que** l'élément d'accouplement (38) côté moyeu comprend une partie de blocage (42) de type barre.
